# EUROPEAN PATENT APPLICATION

(11) **EP 4 786 825 A1**
(43) Date of publication of application: **05.08.2026**
(21) Application number: 24902451.4
(22) Date of filing: 07.11.2024
(51) Int. Cl.: F16H 57/04, B60K 11/02, H02K 9/19

(54) **POWERTRAIN WITH CONTROLLABLE OIL CIRCUIT FLOW, HEAT EXCHANGER AND ELECTRIC VEHICLE**

(30) Priority: 12.12.2023 CN 202311710377
(71) Applicant: Huawei Digital Power Technologies Co., Ltd., Shenzhen, Guangdong 518043 (CN)
(72) Inventor: HUANGFU, Yuzhao, Shenzhen, Guangdong 518043 (CN); LU, Linfeng, Shenzhen, Guangdong 518043 (CN); FENG, Ningbo, Shenzhen, Guangdong 518043 (CN); LIU, Hongbing, Shenzhen, Guangdong 518043 (CN)
(74) Representative: Maiwald GmbH
(86) International application number: PCT/CN2024/130593
(87) International publication number: WO 2025/124028

(57) **Abstract**

This application provides a powertrain with a controllable oil line flow, a heat exchanger, and an electric vehicle. The powertrain includes a housing, a heat exchanger, an oil pump, a temperature control valve, a first oil line, and a second oil line. The housing includes a speed reducer accommodating cavity. The speed reducer accommodating cavity is configured to accommodate a gear set of a speed reducer. An inlet of the oil pump is configured to communicate with the speed reducer accommodating cavity. The first oil line and the second oil line are connected in parallel between an outlet of the oil pump and the speed reducer accommodating cavity. The heat exchanger is configured to cool cooling oil in the first oil line. The temperature control valve is configured to control a flow proportion between the first oil line and the second oil line. In this application, the temperature control valve and the second oil line are used to branch off a flow and are connected in parallel to the first oil line in which the heat exchanger is located. This helps quickly implement low-temperature lubrication, reduce an oil churning loss of the gear set of the speed reducer, and improve efficiency of the powertrain.

## Description

This application claims priority to Chinese Patent Application No. 202311710377.1, filed with the China National Intellectual Property Administration on December 12, 2023 and entitled "POWERTRAIN WITH CONTROLLABLE OIL LINE FLOW, HEAT EXCHANGER, AND ELECTRIC VEHICLE", which is incorporated herein by reference in its entirety.

### TECHNICAL FIELD

This application relates to the field of electric vehicle technologies, and in particular, to a powertrain with a controllable oil line flow, a heat exchanger, and an electric vehicle.

### BACKGROUND

Existing electric vehicles usually use an integrated powertrain as a power source. To implement cooling and lubrication of the powertrain, an oil line usually needs to be arranged in the powertrain. The powertrain includes a motor, a speed reducer, an oil pump, and the like. A gear set in the speed reducer usually needs lubricant for lubrication, to ensure effective rotation of gears and effective transmission between the gears. When an external ambient temperature is low, a viscosity of the lubricant increases as a temperature of the lubricant becomes low. As a result, the rotation between the gears is greatly affected by the lubricant with a large viscosity. In other words, the gears of the speed reducer generate a large oil churning loss, which affects efficiency of the powertrain, and affects vehicle endurance.

### SUMMARY

This application provides a powertrain with a controllable oil line flow, a heat exchanger, and an electric vehicle.

According to a first aspect, an embodiment of this application provides a powertrain with a controllable oil line flow. The powertrain includes a housing, a heat exchanger, an oil pump, a temperature control valve, a first oil line, and a second oil line. The housing includes a speed reducer accommodating cavity. The speed reducer accommodating cavity is configured to accommodate a gear set of a speed reducer. An inlet of the oil pump is configured to communicate with the speed reducer accommodating cavity. The first oil line and the second oil line are connected in parallel between an outlet of the oil pump and the speed reducer accommodating cavity. The heat exchanger is configured to cool cooling oil in the first oil line. The temperature control valve is configured to control a flow proportion between the first oil line and the second oil line.

In this embodiment of this application, the temperature control valve is configured to control the flow proportion between the first oil line and the second oil line. A relatively large amount of cooling oil flows into the second oil line at a low temperature, and a relatively large amount of cooling oil flows into the first oil line at a high temperature. The first oil line and the second oil line help reduce further cooling of the cooling oil at a low temperature. The gear set of the speed reducer generates heat during working, which helps quickly increase a temperature of cooling oil in the speed reducer accommodating cavity. Therefore, a viscosity of the cooling oil is reduced, and system oil resistance is reduced. This helps ensure normal operation of the oil pump, also helps reduce an oil churning loss of the speed reducer, and improves efficiency of the powertrain. The heat exchanger is configured to cool the cooling oil at a high temperature, to prevent the speed reducer from overheating and affecting working performance.

In an embodiment, the heat exchanger is located in the first oil line, and the temperature control valve is located in the second oil line or located at an intersection of the first oil line and the second oil line.

In this embodiment of this application, the heat exchanger is located in the first oil line to cool only the cooling oil in the first oil line, so that a working load of the heat exchanger can be reduced. The temperature control valve is located in the second oil line or located at the intersection of the first oil line and the second oil line, and is configured to control the flow proportion between the first oil line and the second oil line, so that the temperature control valve can accurately control a flow of the second oil line, and ensure that the cooling oil can be controlled to enter the speed reducer accommodating cavity from the second oil line at a low temperature to lubricate the gear set of the speed reducer without passing through the heat exchanger, and working efficiency of the speed reducer at a low temperature is improved.

In an embodiment, the temperature control valve includes one inlet and one outlet, and the second oil line includes a second oil inlet section and a second oil outlet section. The second oil inlet section is configured to communicate the outlet of the oil pump with the inlet, and the second oil outlet section is configured to communicate the outlet with the speed reducer accommodating cavity.

In this embodiment of this application, the temperature control valve is a two-way valve, and includes one inlet and one outlet. The temperature control valve is located in the second oil line, and is configured to adjust an amount of cooling oil flowing in the second oil line. The speed reducer accommodating cavity is configured to accommodate the speed reducer. Cooling oil at a speed reducer accommodating cavity bottom flows into the speed reducer accommodating cavity through the outlet of the oil pump, the second oil inlet section, the inlet of the temperature control valve, an internal flow channel of the temperature control valve, the outlet of the temperature control valve, and the second oil outlet section in sequence, for lubrication of the speed reducer. Alternatively, cooling oil at a speed reducer accommodating cavity bottom passes through the outlet of the oil pump and the first oil line in sequence, and flows into the speed reducer accommodating cavity after being cooled by the heat exchanger. Therefore, when a temperature of the cooling oil at the speed reducer accommodating cavity bottom is low, more cooling oil flows through the second oil line without being cooled by the heat exchanger. This helps quickly increase a temperature of the cooling oil, and helps reduce an oil churning loss of the gear set of the speed reducer during rotation, and reduce a power loss of the powertrain.

In an embodiment, the temperature control valve includes one inlet and two outlets. The first oil line includes a first oil inlet section and a first oil outlet section. The inlet is configured to communicate with the outlet of the oil pump. One outlet is configured to communicate with an inlet of the second oil line. The first oil inlet section is configured to communicate the other outlet with an inlet of the heat exchanger, and the first oil outlet section is configured to communicate an outlet of the heat exchanger with the speed reducer accommodating cavity.

In this embodiment of this application, the temperature control valve includes one inlet and two outlets. The temperature control valve is located at an intersection of an inlet of the first oil line and the inlet of the second oil line, and is configured to adjust a flow proportion of cooling oil in the first oil line and the second oil line. Cooling oil at a speed reducer accommodating cavity bottom flows into the second oil line through the outlet of the oil pump, the inlet of the temperature control valve, one outlet, and the inlet of the second oil line in sequence, and flows into the speed reducer accommodating cavity, for lubrication of the speed reducer. Cooling oil at a speed reducer accommodating cavity bottom flows into the speed reducer in the speed reducer accommodating cavity through the outlet of the oil pump, the inlet of the temperature control valve, the other outlet, the first oil inlet section, the inlet of the heat exchanger, an internal oil passage of the heat exchanger, the outlet of the heat exchanger, and the first oil outlet section in sequence, for cooling and lubrication of the speed reducer.

In this embodiment of this application, when a temperature of the cooling oil at the speed reducer accommodating cavity bottom is low, a relatively large amount of cooling oil flows into the second oil line from one outlet of the temperature control valve, and a relatively small amount of cooling oil flows into the first oil line from the other outlet. This helps reduce heat dissipation of low-temperature cooling oil, helps quickly increase an oil temperature, reduces system oil resistance, and helps the oil pump work quickly and normally. In addition, this helps reduce an oil churning loss of the gear set of the speed reducer, and reduce a power loss. When a temperature of the cooling oil at the speed reducer accommodating cavity bottom is high, a relatively small amount of cooling oil flows into the second oil line from one outlet of the temperature control valve, and a relatively large amount of cooling oil flows into the first oil line from the other outlet. This helps cool hot cooling oil and implement cooling and lubrication of the speed reducer.

In this embodiment of this application, a three-way valve simultaneously controls the flow proportion between the first oil line and the second oil line, so that an operation is simple and control precision is higher.

In an embodiment, the temperature control valve includes two inlets and one outlet. The first oil line includes a first oil inlet section and a first oil outlet section. One inlet is configured to communicate with an outlet of the second oil line. The first oil inlet section is configured to communicate the outlet of the oil pump with an inlet of the heat exchanger. The first oil outlet section is configured to communicate an outlet of the heat exchanger with the other inlet. The outlet is configured to communicate with the speed reducer accommodating cavity.

In this embodiment of this application, the temperature control valve includes two inlets and one outlet. The temperature control valve is located at an intersection of an outlet of the first oil line and the outlet of the second oil line. The speed reducer accommodating cavity is configured to accommodate the speed reducer. Cooling oil at a speed reducer accommodating cavity bottom flows into the temperature control valve from the other inlet through the outlet of the oil pump, the first oil inlet section, an internal oil passage of the heat exchanger, and the first oil outlet section in sequence, and flows out from the outlet for cooling and lubrication of the speed reducer. In addition, cooling oil at a speed reducer accommodating cavity bottom flows into the temperature control valve through the outlet of the oil pump, the second oil line, the outlet of the second oil line, and one inlet, and flows out from the outlet for lubrication of the speed reducer.

In an embodiment, the powertrain further includes a third oil line and a fourth oil line. An inlet of the third oil line is configured to communicate with the outlet of the oil pump. An outlet of the third oil line is configured to communicate with the inlet of the first oil line and the inlet of the second oil line. An inlet of the fourth oil line is configured to communicate with the outlet of the first oil line and the outlet of the second oil line, and an outlet of the fourth oil line is configured to directly communicate with the speed reducer accommodating cavity.

In this embodiment of this application, cooling oil at the speed reducer accommodating cavity bottom passes through the outlet of the oil pump, the inlet of the third oil line, the third oil line, the outlet of the third oil line, the inlet of the first oil line, the first oil line, the outlet of the first oil line, the inlet of the fourth oil line, and the fourth oil line in sequence, and directly flows into the speed reducer in the speed reducer accommodating cavity from the outlet of the fourth oil line. High-temperature cooling oil passes through the heat exchanger for heat exchange, which helps reduce an oil temperature of the hot cooling oil, to cool and lubricate the speed reducer.

In this embodiment of this application, cooling oil at the speed reducer accommodating cavity bottom passes through the outlet of the oil pump, the inlet of the third oil line, the third oil line, the outlet of the third oil line, the inlet of the second oil line, the second oil line, the outlet of the second oil line, the inlet of the fourth oil line, the fourth oil line, and the outlet of the fourth oil line in sequence, and directly flows into the speed reducer in the speed reducer accommodating cavity for lubrication, so that low-temperature cooling oil does not pass through the heat exchanger, and quickly reaches the speed reducer. When the gear set of the speed reducer works, the temperature of the cooling oil is raised, which helps quickly increase a temperature of cooling oil in the speed reducer accommodating cavity. Therefore, a viscosity of the cooling oil is reduced, and system oil resistance is reduced. This helps ensure normal operation of the oil pump, also helps reduce an oil churning loss of the speed reducer, and improves efficiency of the powertrain.

In an embodiment, the temperature control valve and the second oil line are stacked on the heat exchanger. The heat exchanger includes an oil inlet and an oil outlet. The oil inlet is configured to communicate with the outlet of the oil pump. The oil outlet is configured to communicate with the speed reducer accommodating cavity. The second oil line is connected in parallel to an oil line between the oil inlet and the oil outlet. The inlet of the second oil line communicates with the oil inlet, and the outlet of the second oil line communicates with the oil outlet.

In this embodiment of this application, the temperature control valve and the second oil line are stacked on the heat exchanger, which helps reduce a pipeline layout and a pipeline length of the second oil line in the powertrain, so that structures of the temperature control valve, the second oil line, and the heat exchanger are more integrated. This reduces a volume of the powertrain and facilitates miniaturization of the powertrain.

In an embodiment, the temperature control valve stacked on the heat exchanger is a two-way valve or a three-way valve.

In an embodiment, the housing includes an intermediate housing and a speed reducer end cover. The intermediate housing includes a speed reducer accommodating groove and the second oil line that are formed by integrated die casting. The speed reducer accommodating groove and the speed reducer end cover enclose to form the speed reducer accommodating cavity.

In this embodiment of this application, the intermediate housing is formed by integrated die casting, and a process is simple. The speed reducer end cover is configured to seal and cover the speed reducer accommodating groove to form the speed reducer accommodating cavity. The speed reducer accommodating cavity is configured to accommodate the gear set of the speed reducer. The second oil line is formed in the intermediate housing by integrated die casting, which helps reduce die-casting materials, reduce production costs, and reduce an additional pipeline layout, so that a layout of the powertrain is more rational.

In an embodiment, the intermediate housing further includes an oil pump accommodating groove and an oil outlet hole. The oil pump accommodating groove is configured to accommodate the oil pump. The oil outlet hole is configured to communicate with the second oil line. An opening of the oil outlet hole faces the speed reducer accommodating cavity.

In this embodiment of this application, the opening of the oil outlet hole faces the speed reducer accommodating cavity, so that cooling oil is more smoothly input into the speed reducer accommodating cavity. The oil outlet hole faces an opening of the speed reducer accommodating cavity, and the cooling oil may be further sprayed into an oil collecting groove, for lubrication of the gear set of the speed reducer. In this embodiment of this application, after being pumped out from an outlet of the oil pump accommodating groove, the cooling oil passes through the second oil line that is die-casted in the intermediate housing and the oil outlet, and directly flows into the speed reducer accommodating cavity without passing through a long pipeline, so that a path for flowing into the speed reducer accommodating cavity is shorter, and oil resistance is reduced.

In an embodiment, the powertrain includes two heat exchangers, two oil pumps, two first oil lines, two second oil lines, and one temperature control valve, and the housing includes two speed reducer accommodating cavities. The two speed reducer accommodating cavities communicate with each other, the two second oil lines communicate with each other, and the temperature control valve is further configured to control the flow proportion between the first oil line and the second oil line.

In this embodiment of this application, the powertrain may be used in a dual-motor powertrain, where both motors are each connected to one speed reducer in a transmission manner. The housing of the powertrain includes two speed reducer accommodating cavities, and the two second oil lines communicate with each other, so that cooling oil of each second oil line can flow into the two speed reducer accommodating cavities, to improve a circulation range of the cooling oil. One temperature control valve is configured to control the flow proportion between the first oil line and the second oil line, so that one temperature control valve can control flows of cooling oil of the two speed reducer accommodating cavities based on a temperature, and oil lines of the dual-motor powertrain are more flexible and match various environments, so that cooling and lubrication efficiency of the powertrain oil lines is improved.

According to a second aspect, an embodiment of this application provides a heat exchanger integrated with a temperature control valve. The heat exchanger includes the temperature control valve, a valve channel, and a plurality of circulation plates. The plurality of circulation plates are stacked. Each circulation plate includes four openings, where two openings are used for circulating cooling oil, and the other two openings are used for circulating coolant. The temperature control valve and the valve channel are arranged on one side of one circulation plate, the temperature control valve is located in the valve channel, an inlet and an outlet of the valve channel respectively communicate with the two openings of the one circulation plate, and the temperature control valve is configured to control a flow of the valve channel.

In this embodiment of this application, the heat exchanger and the valve channel are arranged in an integrated manner. Cooling oil flowing between two openings on the plurality of circulation plates or coolant flowing between the other two openings respectively form a plurality of sub-oil passages or sub-liquid passages in the heat exchanger. The sub-oil passages and the sub-liquid passages are stacked, which helps increase a heat exchange area of circulation of the cooling oil and the coolant, and helps improve cooling efficiency of the cooling oil.

In this embodiment of this application, the temperature control valve is configured to control a flow of the valve channel. When a temperature of the cooling oil is low, a relatively large amount of cooling oil flows into the valve channel, and a relatively small amount of cooling oil flows through the circulation plates of the heat exchanger. This prevents more cooling oil from being cooled by the heat exchanger, helps quickly increase a temperature of low-temperature cooling oil, helps an oil pump work quickly and normally, and helps reduce a viscosity of the cooling oil, reduce system oil resistance, reduce an oil churning loss when a gear set of a speed reducer works, and reduce a power loss of the powertrain. When a temperature of the cooling oil is high, a relatively small amount of cooling oil flows into the valve channel, and a relatively large amount of cooling oil flows through the circulation plates of the heat exchanger. This helps more hot-cooling oil be cooled by the heat exchanger, and facilitates cooling and lubrication of the speed reducer and a motor, to implement temperature rise control on the powertrain. The arrangement of the valve channel and the temperature control valve is helpful to implement high efficiency of operation of the powertrain.

In an embodiment, the valve channel is stacked between the one circulation plate and another circulation plate.

In this embodiment of this application, the temperature control valve is located in the valve channel, and the temperature control valve is configured to control a flow of the valve channel. The temperature control valve and the valve channel are stacked between the one circulation plate and another circulation plate of the heat exchanger, so that the valve channel is integrated in the heat exchanger without occupying much space outside the heat exchanger.

In an embodiment, the heat exchanger further includes a top plate. The top plate is stacked on the plurality of circulation plates, and the valve channel is stacked between the top plate and the one circulation plate.

In this embodiment of this application, the top plate is located at the top of the heat exchanger in a direction perpendicular to an axial direction of the heat exchanger. No cooling oil or coolant flows on the top plate, and the top plate is configured to communicate with and block off cooling oil or coolant flowing on the circulation plate closest to the top plate, to isolate an oil passage and a liquid passage in the heat exchanger from the outside. In this embodiment of this application, the top plate communicates with a cooling system of the entire vehicle without a liquid pipe or a pipeline on the top of the top plate. The temperature control valve and the valve channel are stacked between the top plate and the one circulation plate. The top plate, the valve channel, and the plurality of circulation plates are arranged in sequence in the direction perpendicular to the axial direction of the heat exchanger.

In an embodiment, the heat exchanger further includes a mounting plate. The mounting plate is configured to fasten a powertrain housing, and the valve channel is stacked between the one circulation plate and the mounting plate.

In this embodiment of this application, the mounting plate is located at the bottom of the heat exchanger in the direction perpendicular to the axial direction of the heat exchanger. The temperature control valve is located in the valve channel. The temperature control valve and the valve channel are stacked between the one circulation plate and the mounting plate. The top plate, the plurality of circulation plates, the valve channel, and the mounting plate are arranged in sequence in the direction perpendicular to the axial direction of the heat exchanger.

In an embodiment, the mounting plate and the valve channel may be fastened in the powertrain housing, so that the powertrain is smaller in volume.

According to a third aspect, an embodiment of this application provides an electric vehicle. The electric vehicle includes a vehicle body, a cooling system, and the powertrain provided in any one of the foregoing embodiments or the heat exchanger provided in any one of the foregoing embodiments. The vehicle body is configured to fasten the cooling system, and the powertrain or the heat exchanger. The cooling system is configured to perform heat exchange with the heat exchanger. The powertrain is configured to provide power for a wheel of the electric vehicle. In this embodiment of this application, a second oil line in the powertrain is used to divert a portion of oil which does not flow through the heat exchanger, and a temperature control valve is disposed in the second oil line. This helps control, by using the temperature control valve, an amount of cooling oil flowing through a first oil line and the second oil line. When a temperature of the cooling oil is low, an opening of the temperature control valve for the second oil line becomes greater, so that more cooling oil is not cooled by the heat exchanger, and is directly transferred to the speed reducer accommodating cavity to lubricate a speed reducer. This reduces a viscosity of the cooling oil and reduces an oil churning loss when a gear set of the speed reducer works. When a temperature of the cooling oil is high, an opening of the temperature control valve for the first oil line becomes greater, so that more cooling oil enters the heat exchanger for cooling, and the cooled cooling oil is transferred to the speed reducer for cooling and lubrication. The second oil line and the temperature control valve help improve efficiency of the powertrain, so that performance of the electric vehicle is improved.

### BRIEF DESCRIPTION OF DRAWINGS

To describe technical solutions in embodiments of this application more clearly, the following describes the accompanying drawings used in embodiments of this application.
FIG. 1 is a diagram of a structure of an electric vehicle according to an embodiment of this application;
FIG. 2 is a diagram of a structure of a powertrain according to an embodiment of this application;
FIG. 3 is a diagram of a structure of a powertrain according to an embodiment of this application;
FIG. 4 is a diagram of a structure of a powertrain according to an embodiment of this application;
FIG. 5 is a diagram of a structure of a powertrain according to an embodiment of this application;
FIG. 6 is a diagram of a structure of a powertrain according to an embodiment of this application;
FIG. 7 is a diagram of a structure of a powertrain according to an embodiment of this application;
FIG. 8 is a diagram of a structure of a powertrain according to an embodiment of this application;
FIG. 9 is a diagram of a structure of a powertrain according to an embodiment of this application;
FIG. 10 is a diagram of a structure of a powertrain according to an embodiment of this application;
FIG. 11 is a diagram of a structure of a powertrain according to an embodiment of this application;
FIG. 12 is a diagram of a structure of a heat exchanger according to an embodiment of this application;
FIG. 13 is a diagram of a structure of a heat exchanger according to an embodiment of this application;
FIG. 14 is a diagram of a structure of an intermediate housing according to an embodiment of this application;
FIG. 15 is a diagram of a structure of a powertrain according to an embodiment of this application;
FIG. 16 is a diagram of a structure of a powertrain according to an embodiment of this application;
FIG. 17 is a diagram of a structure of a powertrain according to an embodiment of this application;
FIG. 18 is a diagram of a structure of a powertrain according to an embodiment of this application;
FIG. 19 is a diagram of a structure of a powertrain according to an embodiment of this application;
FIG. 20 is a diagram of a structure of a powertrain according to an embodiment of this application;
FIG. 21 is a diagram of a structure of a powertrain according to an embodiment of this application;
FIG. 22 is a diagram of a structure of a powertrain according to an embodiment of this application;
FIG. 23 is a diagram of a structure of a powertrain according to an embodiment of this application; and
FIG. 24 is a diagram of a structure of a heat exchanger according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

Terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more than two.

In addition, in this specification, position terms such as "top" and "bottom" are defined relative to positions of structures in the accompanying drawings. It should be understood that these position terms are relative concepts used for relative description and clarification, and may correspondingly change according to changes in the positions of the structures.

For ease of understanding, the following explains and describes related technical terms used in embodiments of this application.

Parallelism: Parallelism defined in embodiments of this application is not limited to absolute parallelism. The definition of parallelism herein may be understood as basic parallelism, and includes non-absolute parallelism caused by factors such as an assembly tolerance, a design tolerance, and impact of structure flatness.

Verticality: Verticality defined in embodiments of this application is not limited to an absolute vertical intersection (where an included angle is 90 degrees) relationship. A case in which there is no absolute perpendicular intersection due to an assembling tolerance, a design tolerance, impact of structural flatness, or another factor is allowed. An error within a small angle range is allowed. For example, an assembling error range of 80 degrees to 100 degrees may be understood as a vertical relationship.

To improve working efficiency of a speed reducer and reduce an oil churning loss of the speed reducer, an embodiment of this application provides a powertrain with a controllable oil line flow. The powertrain includes a housing, a heat exchanger, an oil pump, a temperature control valve, a first oil line, and a second oil line. The housing includes a speed reducer accommodating cavity. The speed reducer accommodating cavity is configured to accommodate a gear set of the speed reducer. An inlet of the oil pump is configured to communicate with the speed reducer accommodating cavity. The first oil line and the second oil line are connected in parallel between an outlet of the oil pump and the speed reducer accommodating cavity. The heat exchanger is configured to cool cooling oil in the first oil line. The temperature control valve is configured to control a flow proportion between the first oil line and the second oil line. In this application, the second oil line of a speed reducer oil line is used to divert a portion of oil which does not flow through the heat exchanger, and the temperature control valve is disposed in the second oil line. This helps control, by using the temperature control valve, an amount of cooling oil flowing through the first oil line and the second oil line. When a temperature of the cooling oil is low, an opening of the temperature control valve for the second oil line becomes greater, so that more cooling oil is not cooled by the heat exchanger, and is directly transferred to the speed reducer accommodating cavity to lubricate the speed reducer. This reduces a viscosity of the cooling oil and reduces an oil churning loss when the gear set of the speed reducer works. When a temperature of the cooling oil is high, an opening of the temperature control valve for the first oil line becomes greater, so that more cooling oil enters the heat exchanger for cooling, and the cooled cooling oil is transferred to the speed reducer for cooling and lubrication. The second oil line and the temperature control valve help improve efficiency of the powertrain.

The powertrain provided in embodiments of this application in which an oil line is provided with a temperature control valve is used in an electric vehicle, and the heat exchanger provided in embodiments of this application is used in the powertrain, to improve overall performance of the electric vehicle.

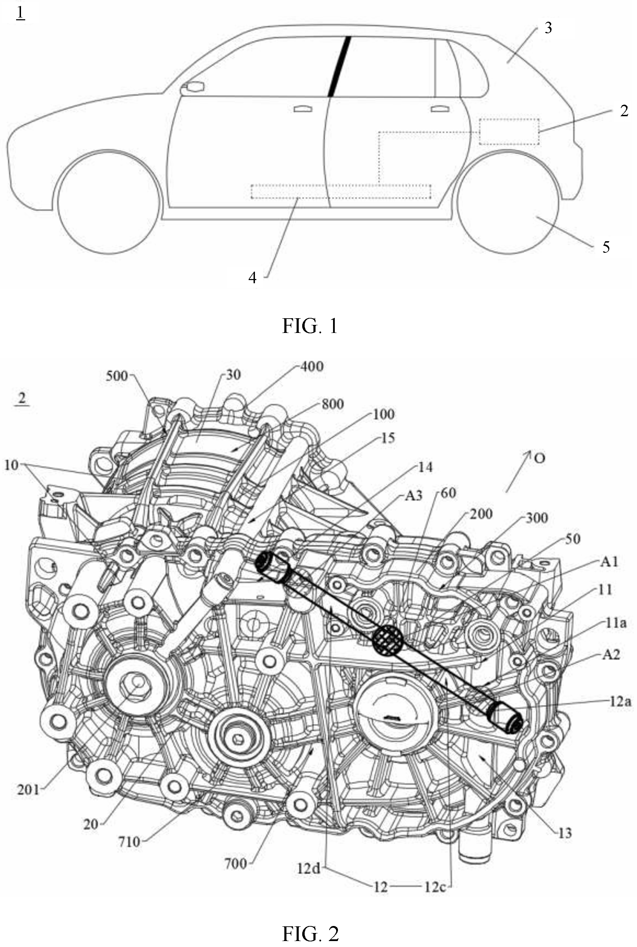

Refer to FIG. 1. FIG. 1 is a diagram of a structure of an electric vehicle 1 according to an embodiment of this application. In this embodiment of this application, the electric vehicle 1 includes a powertrain 2, a vehicle body 3, a battery pack 4, and wheels 5. The powertrain 2 and the battery pack 4 are fastened to the vehicle body 3. The powertrain 2 is configured to receive power supplied by the battery pack 4, and is configured to drive the wheels 5.

In this embodiment of this application, the battery pack 4 may also be referred to as a power battery.

In this embodiment of this application, the electric vehicle 1 is a wheeled device driven or towed by a power apparatus.

The following describes in detail the powertrain 2 and a heat exchanger 50 provided in embodiments of this application.

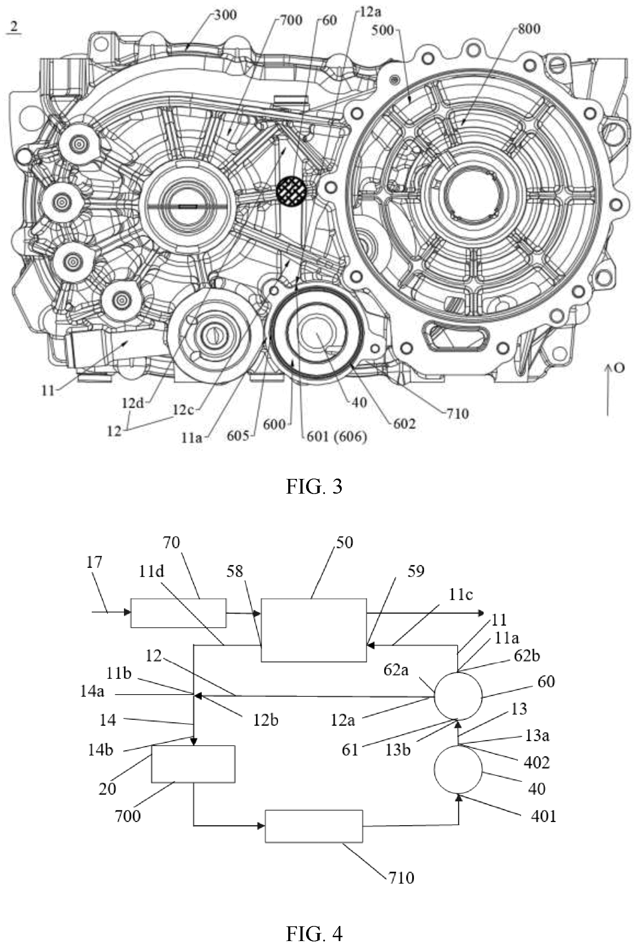

Refer to FIG. 2 and FIG. 3. FIG. 2 is a diagram of a structure of a powertrain 2 according to an embodiment of this application, and FIG. 3 is a diagram of a structure of a powertrain 2 according to an embodiment of this application. In an embodiment, the powertrain 2 includes a housing 10, a speed reducer 20, a motor 30, an oil pump 40, and the heat exchanger 50. The housing 10 includes a speed reducer accommodating cavity 700 and a motor accommodating cavity 800. The motor accommodating cavity 800 is configured to accommodate the motor 30, and the speed reducer accommodating cavity 700 is configured to accommodate the speed reducer 20. The motor 30 converts electric energy provided by a motor control unit 70 into kinetic energy, and transmits the kinetic energy to an input shaft 201 in the speed reducer 20. The input shaft 201 transmits power to an internal gear of the speed reducer 20. An output shaft (not shown in the figure) of the speed reducer 20 is configured to transmit the power of the motor 30 to the wheels 5. It should be noted that a position of the input shaft 201 is schematic, and a position of the heat exchanger 50 is schematic. The oil pump 40 is configured to transfer cooling oil at a speed reducer accommodating cavity bottom 710 to the speed reducer accommodating cavity 700 and the motor accommodating cavity 800, for cooling and lubrication of the speed reducer 20 and the motor 30. The speed reducer accommodating cavity bottom 710 may also be referred to as an oil sump in the speed reducer accommodating cavity 700.

In this embodiment of this application, the motor 30 includes a stator (not shown in the figure), a rotor (not shown in the figure), and a motor shaft (not shown in the figure), and the rotor is fastened to the motor shaft. The speed reducer 20 includes the input shaft 201, an intermediate shaft (not shown in the figure), the output shaft (not shown in the figure), a gear train (not shown in the figure), and the like. The motor shaft communicates with the input shaft 201 of the speed reducer 20 in a transmission manner, and the gear train in the speed reducer 20 is used for transmission, to implement deceleration for power output by the motor shaft.

In this embodiment of this application, the motor accommodating cavity 800 communicates with the speed reducer accommodating cavity 700 in an axial direction O of the powertrain, and the motor accommodating cavity 800 and the speed reducer accommodating cavity 700 are arranged in the axial direction O of the powertrain.

Still refer to FIG. 1 and FIG. 2. In an embodiment, the powertrain 2 further includes the motor control unit 70 (as shown in FIG. 4). The motor control unit 70 is configured to: receive a direct current of the battery pack 4, and output an alternating current to the motor 30. The stator in the motor 30 is configured to: receive the alternating current output by the motor control unit 70, and drive the rotor and the motor shaft in the motor 30 to rotate. The motor shaft rotates to drive the input shaft 201 to rotate.

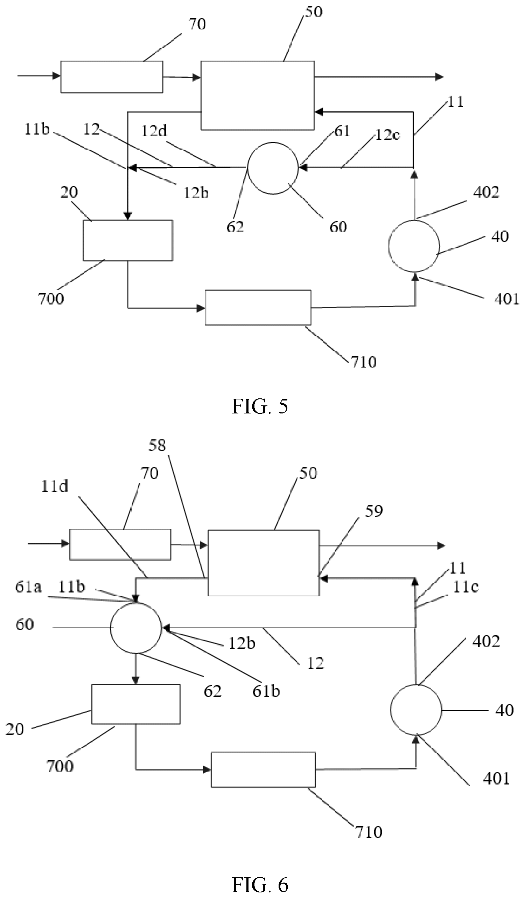

Refer to FIG. 2, FIG. 4, FIG. 5, and FIG. 6. FIG. 4 is a diagram of a structure of a powertrain 2 according to an embodiment of this application, FIG. 5 is a diagram of a structure of a powertrain 2 according to an embodiment of this application, and FIG. 6 is a diagram of a structure of a powertrain 2 according to an embodiment of this application. In an embodiment, the powertrain 2 in which a speed reducer oil line is provided with a temperature control valve includes a housing 10 (as shown in FIG. 2), a heat exchanger 50, an oil pump 40, a temperature control valve 60, a first oil line 11, and a second oil line 12. The housing 10 includes a speed reducer accommodating cavity 700 (as shown in FIG. 2). The speed reducer accommodating cavity 700 is configured to accommodate a gear set (not shown in the figure) of a speed reducer 20. An inlet 401 of the oil pump 40 is configured to communicate with the speed reducer accommodating cavity 700. The first oil line 11 and the second oil line 12 are connected in parallel between an outlet 402 of the oil pump 40 and the speed reducer accommodating cavity 700. The first oil line 11 and the second oil line 12 are connected in parallel, and the heat exchanger 50 is configured to cool cooling oil in the first oil line 11. The temperature control valve 60 is configured to control a flow proportion between the first oil line 11 and the second oil line 12.

In this embodiment of this application, the speed reducer accommodating cavity bottom 710 is configured to accommodate cooling oil, the inlet 401 of the oil pump 40 is configured to communicate with the speed reducer accommodating cavity bottom 710, and the oil pump 40 is located at the speed reducer accommodating cavity bottom 710 (as shown in FIG. 3), so that the inlet 401 of the oil pump 40 can communicate with the speed reducer accommodating cavity bottom 710 (as shown in FIG. 4). This helps the oil pump 40 provide oil pressure for the cooling oil at the speed reducer accommodating cavity bottom 710, and drive the cooling oil to be transmitted to the speed reducer 20, for cooling and lubrication of the speed reducer 20. The second oil line 12 is disposed in an oil line through which the cooling oil flows into the speed reducer 20, and is used to divert a portion of oil which does not flow through the heat exchanger 50, and the temperature control valve 60 is disposed in the second oil line 12. This helps control flows of cooling oil in the first oil line 11 and the second oil line 12, and improves efficiency of the powertrain 2.

In this embodiment of this application, that the first oil line 11 and the second oil line 12 are connected in parallel means that an inlet 11a of the first oil line 11 communicates with an inlet 12a of the second oil line 12, and that an outlet 11b of the first oil line communicates with an outlet 12b of the second oil line.

In this embodiment of this application, the temperature control valve 60 is configured to control the flow proportion between the first oil line 11 and the second oil line 12. A relatively large amount of cooling oil flows into the second oil line 12 at a low temperature, and a relatively large amount of cooling oil flows into the first oil line 11 at a high temperature. The first oil line 11 and the second oil line 12 help reduce further cooling of the cooling oil at a low temperature. The gear set of the speed reducer 20 generates heat during working, which helps quickly increase a temperature of cooling oil in the speed reducer accommodating cavity 700. Therefore, a viscosity of the cooling oil is reduced, and system oil resistance is reduced. This helps ensure normal operation of the oil pump 40, also helps reduce an oil churning loss of the speed reducer 20, and improves efficiency of the powertrain 2. The heat exchanger 50 is configured to cool the cooling oil at a high temperature, to prevent the speed reducer 20 from overheating and affecting working performance.

In an embodiment, the heat exchanger 50 is located in the first oil line 11, and the temperature control valve 60 is located in the second oil line 12 or located at an intersection of the first oil line 11 and the second oil line 12.

In this embodiment of this application, as shown in FIG. 5, the temperature control valve 60 is located in the second oil line 12. After being pumped out by the oil pump 40, the cooling oil at the speed reducer accommodating cavity bottom 710 flows through the second oil line 12 and the temperature control valve 60 in the second oil line 12, and immediately flows into the speed reducer 20, for lubrication of the gear set of the speed reducer 20. Alternatively, after being pumped out by the oil pump 40, the cooling oil at the speed reducer accommodating cavity bottom 710 flows through the first oil line 11, flows out of the first oil line 11 after heat exchange and cooling by the heat exchanger 50 in the first oil line 11, and immediately flows into the speed reducer 20, for cooling and lubrication of the gear set of the speed reducer 20.

In this embodiment of this application, as shown in FIG. 4, the temperature control valve 60 is located at an intersection of the inlet 11a of the first oil line and the inlet 12a of the second oil line. After being pumped out by the oil pump 40, the cooling oil at the speed reducer accommodating cavity bottom 710 flows through both the temperature control valve 60 and the first oil line 11, is cooled by the heat exchanger 50 in the first oil line 11, then converges with cooling oil that flows directly through the temperature control valve 60 and the second oil line 12, and flows into the speed reducer 20 in the speed reducer accommodating cavity 700, for lubrication of the speed reducer 20.

In this embodiment of this application, as shown in FIG. 6, the temperature control valve 60 is located at an intersection of the outlet 11b of the first oil line and the outlet 12b of the second oil line. After being pumped out by the oil pump 40, the cooling oil at the speed reducer accommodating cavity bottom 710 respectively flows through the first oil line 11, flows to the temperature control valve 60 after being cooled by the heat exchanger 50 in the first oil line 11, and then immediately flows into the speed reducer 20 in the speed reducer accommodating cavity 700, for cooling and lubrication of the speed reducer 20; or flows through the second oil line 12 and the temperature control valve 60, and directly flows into the speed reducer 20 without being cooled by the heat exchanger 50.

Refer to FIG. 6. In an embodiment, the powertrain 2 further includes a hot source (not shown in the figure), and the hot source is located in an oil line between the outlet 402 of the oil pump 40 and the speed reducer accommodating cavity bottom 710, and is configured to heat the cooling oil. The heat source includes at least one of the gear set of the speed reducer 20, a motor stator, a motor rotor, and a heating resistor (not shown in the figure).

In this embodiment of this application, the heat source heats the cooling oil, and a temperature rise of the cooling oil helps reduce a viscosity of the cooling oil, helps the oil pump 40 operate quickly and normally when an external ambient temperature is low, allows the first oil line 11 and the second oil line 12 to work normally, further helps reduce an oil churning loss when the gear set of the speed reducer 20 works, and improves efficiency of the powertrain 2.

Refer to FIG. 4. In an embodiment, the temperature control valve 60 includes a temperature sensing medium. The temperature sensing medium is configured to perform deforming based on a temperature of cooling oil flowing through the temperature control valve 60, to change an opening of the temperature control valve 60, or the temperature control valve 60 is configured to change an opening in response to a temperature control signal.

In this embodiment of this application, the temperature control valve 60 includes the temperature sensing medium. The temperature sensing medium is configured to perform deforming based on the temperature of the cooling oil flowing through the temperature control valve 60, to change the opening of the temperature control valve 60. When the temperature control valve 60 senses that a temperature of the cooling oil output by the oil pump 40 is low, the opening of the temperature control valve 60 for the second oil line 12 becomes greater, or the opening of the temperature control valve 60 for the first oil line 11 becomes smaller. In this way, more cooling oil is not cooled by the heat exchanger 50 in the first oil line 11. This prevents the cooling oil from being further cooled and increasing the viscosity of the cooling oil, reduces an oil churning loss when the gear set of the speed reducer 20 works, and improves efficiency of the powertrain 2. When the temperature control valve 60 senses that the temperature of the cooling oil output by the oil pump 40 is high, the opening of the temperature control valve 60 for the second oil line 12 becomes smaller, and the opening of the temperature control valve 60 for the first oil line 11 becomes greater. In this way, more hot-cooling oil flows through the heat exchanger 50 in the first oil line 11, and the hot cooling oil flows into the speed reducer 20 after being cooled by the heat exchanger 50, which is prone to cooling and lubrication of the speed reducer 20, and helps implement temperature rise control on the powertrain 2. For example, the temperature control valve 60 is a thermostat.

In this embodiment of this application, the temperature control valve 60 is configured to change the opening in response to the temperature control signal. When the motor control unit 70 or another controller receives a low temperature signal, the temperature control valve 60 is controlled to increase the opening for the second oil line 12, and the temperature control valve 60 is controlled to decrease the opening for the first oil line 11, so that more cooling oil is not cooled by the heat exchanger 50 in the first oil line 11. This prevents the cooling oil from being further cooled and increasing the viscosity of the cooling oil, reduces an oil churning loss when the gear set of the speed reducer 20 works, and improves efficiency of the powertrain 2. When the motor control unit 70 or another controller receives a high temperature signal, the temperature control valve 60 is controlled to decrease the opening for the second oil line 12, and the temperature control valve 60 is controlled to increase the opening for the first oil line 11, so that more hot-cooling oil flows through the heat exchanger 50 in the first oil line 11, and the hot cooling oil flows into the speed reducer 20 after being cooled by the heat exchanger 50, which is prone to cooling and lubrication of the speed reducer 20, and helps implement temperature rise control on the powertrain 2. For example, the temperature control valve 60 is a solenoid valve. The low temperature signal and the high temperature signal of the temperature control signal may come from an ambient temperature detected by the motor control unit 70 or the entire vehicle, a temperature of the motor stator or the motor rotor, a temperature of cooling oil in the housing of the powertrain, and the like.

Refer to FIG. 5. In an embodiment, the temperature control valve 60 includes one inlet 61 and one outlet 62, and the second oil line 12 includes a second oil inlet section 12c and a second oil outlet section 12d. The second oil inlet section 12c is configured to communicate the outlet 402 of the oil pump 40 with the inlet 401, and the second oil outlet section 12d is configured to communicate the outlet 402 with the speed reducer accommodating cavity 700 (as shown in FIG. 2).

In this embodiment of this application, the temperature control valve 60 is a two-way valve, and includes one inlet 61 and one outlet 62. The temperature control valve 60 is located in the second oil line 12, and is configured to adjust an amount of cooling oil flowing in the second oil line 12. The speed reducer accommodating cavity 700 is configured to accommodate the speed reducer 20. The cooling oil at the speed reducer accommodating cavity bottom 710 flows into the speed reducer accommodating cavity 700 through the outlet 402 of the oil pump 40, the second oil inlet section 12c, the inlet 61 of the temperature control valve 60, an internal flow channel of the temperature control valve 60, the outlet 62 of the temperature control valve 60, and the second oil outlet section 12d in sequence, for lubrication of the speed reducer 20. Alternatively, the cooling oil at the speed reducer accommodating cavity bottom 710 passes through the outlet 402 of the oil pump 40 and the first oil line 11 in sequence, and flows into the speed reducer accommodating cavity 700 after being cooled by the heat exchanger 50. Therefore, when a temperature of the cooling oil at the speed reducer accommodating cavity bottom 710 is low, more cooling oil flows through the second oil line 12 without being cooled by the heat exchanger 50. This helps quickly increase a temperature of the cooling oil, and helps reduce an oil churning loss of the gear set of the speed reducer 20 during rotation, and reduce a power loss of the powertrain 2.

In an embodiment, when both the first oil line 11 and the second oil line 12 have a flow, the cooling oil in the first oil line 11 and the cooling oil in the second oil line 12 flow into the speed reducer accommodating cavity 700 after converging at the outlet 11b of the first oil line 11 and the outlet 12b of the second oil line 12. In an embodiment, when the temperature control valve 60 is used as a two-way valve to open the second oil line 12, the opening for the second oil line 12 is relatively large, so that when the cooling oil all flows through the second oil line 12 without passing through the first oil line 11, only the cooling oil of the second oil line 12 enters the speed reducer accommodating cavity 700.

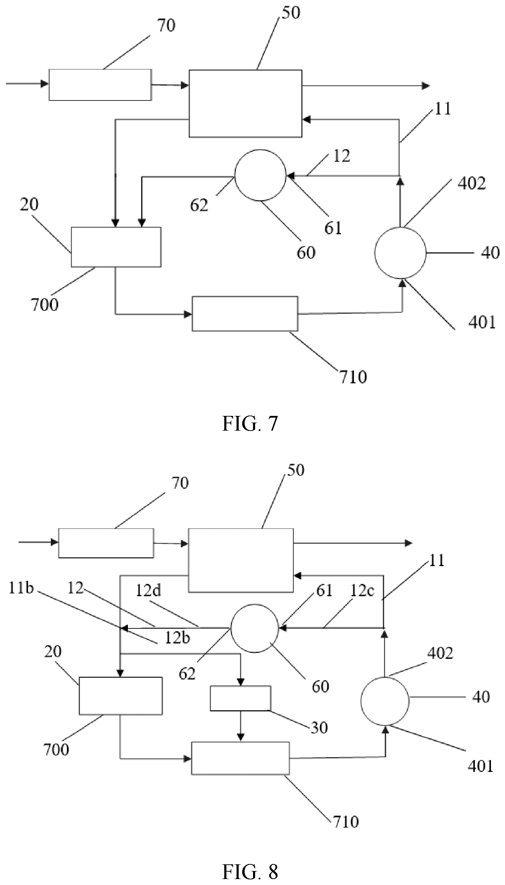

Refer to FIG. 7. FIG. 7 is a diagram of a structure of a powertrain 2 according to an embodiment of this application. In an embodiment, the temperature control valve 60 is located in the second oil line 12. The temperature control valve 60 includes one inlet 61 and one outlet 62. The cooling oil flowing through the temperature control valve 60 does not converge with the cooling oil cooled by the heat exchanger 50 in the first oil line 11, and directly flows into the speed reducer accommodating cavity 700 (as shown in FIG. 2). The cooling oil in the first oil line 11 and the cooling oil in the second oil line 12 separately flow into the speed reducer accommodating cavity 700.

Refer to FIG. 4. In an embodiment, the temperature control valve 60 includes one inlet 61 and two outlets 62a and 62b. The first oil line 11 includes a first oil inlet section 11c and a first oil outlet section 11d. The inlet 61 is configured to communicate with the outlet 402 of the oil pump 40. The outlet 62a is configured to communicate with the inlet 12a of the second oil line 12. The first oil inlet section 11c is configured to communicate the other outlet 62b with an inlet 59 of the heat exchanger 50. The first oil outlet section 11d is configured to communicate an outlet 58 of the heat exchanger 50 with the speed reducer accommodating cavity 700 (as shown in FIG. 2).

In this embodiment of this application, the temperature control valve 60 is a three-way valve, including one inlet 61 and two outlets 62a and 62b. The temperature control valve 60 is located at an intersection of the inlet 11a of the first oil line 11 and the inlet 12a of the second oil line 12, and is configured to adjust a flow proportion of cooling oil in the first oil line 11 and the second oil line 12. The cooling oil at the speed reducer accommodating cavity bottom 710 flows into the second oil line 12 through the outlet 402 of the oil pump 40, the inlet 61 of the temperature control valve 60, the outlet 62a, and the inlet 12a of the second oil line 12 in sequence, and flows into the speed reducer accommodating cavity 700, for lubrication of the speed reducer 20. The cooling oil at the speed reducer accommodating cavity bottom 710 flows into the speed reducer 20 in the speed reducer accommodating cavity 700 through the outlet 402 of the oil pump 40, the inlet 61 of the temperature control valve 60, the other outlet 62b, the first oil inlet section 11c, the inlet 59 of the heat exchanger 50, an internal oil passage of the heat exchanger 50, the outlet 58 of the heat exchanger 50, and the first oil outlet section 11d in sequence, for cooling and lubrication of the speed reducer 20.

In this embodiment of this application, when a temperature of the cooling oil at the speed reducer accommodating cavity bottom 710 is low, a relatively large amount of cooling oil flows into the second oil line 12 from the outlet 62a of the temperature control valve 60, and a relatively small amount of cooling oil flows into the first oil line 11 from the other outlet 62b. This helps reduce heat dissipation of low-temperature cooling oil, helps quickly increase an oil temperature, reduces system oil resistance, and helps the oil pump 40 work quickly and normally. In addition, this helps reduce an oil churning loss of the gear set of the speed reducer 20, and reduce a power loss. When a temperature of the cooling oil at the speed reducer accommodating cavity bottom 710 is high, a relatively small amount of cooling oil flows into the second oil line 12 from the outlet 62a of the temperature control valve 60, and a relatively large amount of cooling oil flows into the first oil line 11 from the other outlet 62b. This helps cool hot cooling oil and implement cooling and lubrication of the speed reducer 20.

In this embodiment of this application, a three-way valve simultaneously controls the flow proportion between the first oil line 11 and the second oil line 12, so that an operation is simple, and control precision is higher.

Refer to FIG. 6. In an embodiment, the temperature control valve 60 includes two inlets 61a and 61b and one outlet 62. The first oil line 11 includes a first oil inlet section 11c and a first oil outlet section 11d. The inlet 61b is configured to communicate with the outlet 12b of the second oil line 12. The first oil inlet section 11c is configured to communicate the outlet 402 of the oil pump 40 with an inlet 59 of the heat exchanger 50. The first oil outlet section 11d is configured to communicate an outlet 58 of the heat exchanger 50 with the other inlet 61a. The outlet 62 is configured to communicate with the speed reducer accommodating cavity 700 (as shown in FIG. 2).

In this embodiment of this application, the temperature control valve 60 is a three-way valve, including two inlets 61a and 61b and one outlet 62. The temperature control valve 60 is located at an intersection of the outlet 11b of the first oil line 11 and the outlet 12b of the second oil line 12. The speed reducer accommodating cavity 700 is configured to accommodate the speed reducer 20. The cooling oil at the speed reducer accommodating cavity bottom 710 flows into the temperature control valve 60 from the other inlet 61a through the outlet 402 of the oil pump 40, the first oil inlet section 11c, an internal oil passage of the heat exchanger 50, and the first oil outlet section 11d in sequence, and flows out from the outlet 62 for cooling and lubrication of the speed reducer 20. In addition, the cooling oil at the speed reducer accommodating cavity bottom 710 flows into the temperature control valve 60 through the outlet 402 of the oil pump 40, the second oil line 12, the outlet 12b of the second oil line 12, and the inlet 61b, and flows out from the outlet 62 for lubrication of the speed reducer 20.

In the foregoing three embodiments shown in FIG. 4, FIG. 5, and FIG. 6, a proper arrangement manner of the temperature control valve 60 may be selected by using a powertrain layout, so that arrangement is more flexible.

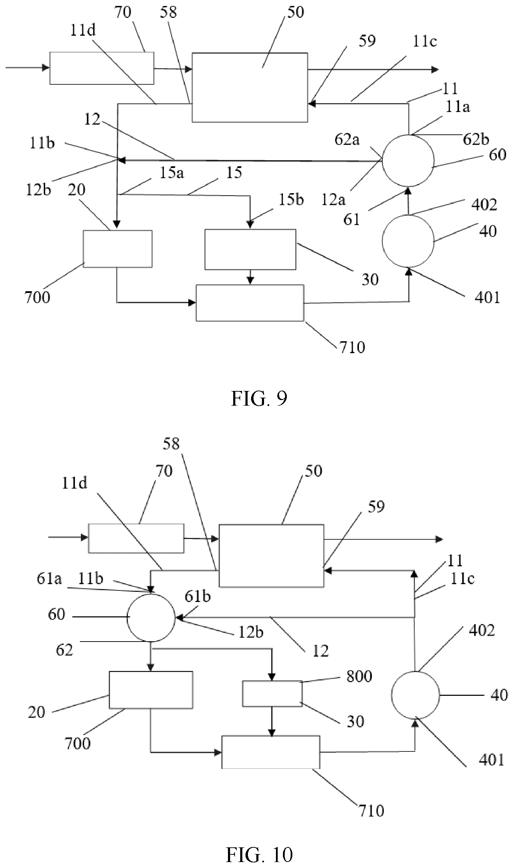

Refer to FIG. 2, FIG. 8, FIG. 9, and FIG. 10. FIG. 8 is a diagram of a structure of a powertrain 2 according to an embodiment of this application, FIG. 9 is a diagram of a structure of a powertrain 2 according to an embodiment of this application, and FIG. 10 is a diagram of a structure of a powertrain 2 according to an embodiment of this application. In an embodiment, the housing 10 (as shown in FIG. 2) further includes a motor accommodating cavity 800 (as shown in FIG. 2). The motor accommodating cavity 800 is configured to accommodate the motor 30. Both the first oil line 11 and the second oil line 12 are configured to communicate with the outlet 402 of the oil pump 40, the speed reducer accommodating cavity 700 (as shown in FIG. 2), and the motor accommodating cavity 800. The temperature control valve 60 is located in the second oil line 12 or located at an intersection of the first oil line 11 and the second oil line 12.

In this embodiment of this application, as shown in FIG. 8, the temperature control valve 60 is located in the second oil line 12. The temperature control valve 60 includes one inlet 61 and one outlet 62. The second oil line 12 includes a second oil inlet section 12c and a second oil outlet section 12d. The second oil inlet section 12c is configured to communicate the outlet 402 of the oil pump 40 with the inlet 401, and the second oil outlet section 12d is configured to communicate with the outlet 402, the speed reducer accommodating cavity 700, and the motor accommodating cavity 800.

In this embodiment of this application, as shown in FIG. 9, the temperature control valve 60 is located at an intersection of the inlet 11a of the first oil line 11 and the inlet 12a of the second oil line 12. The temperature control valve 60 includes one inlet 61 and two outlets 62a and 62b. The first oil line 11 includes a first oil inlet section 11c and a first oil outlet section 11d. The inlet 61 is configured to communicate with the outlet 402 of the oil pump 40. The outlet 62a is configured to communicate with the inlet 12a of the second oil line 12. The first oil inlet section 11c is configured to communicate the other outlet 62b with the inlet 59 of the heat exchanger 50. The first oil outlet section 11d is configured to communicate with the outlet 58 of the heat exchanger 50, the speed reducer accommodating cavity 700, and the motor accommodating cavity 800.

In this embodiment of this application, as shown in FIG. 10, the temperature control valve 60 is located at an intersection of the outlet 11b of the first oil line 11 and the outlet 12b of the second oil line 12. The temperature control valve 60 includes two inlets 61a and 61b and one outlet 62. The first oil line 11 includes a first oil inlet section 11c and a first oil outlet section 11d. The inlet 61b is configured to communicate with the outlet 12b of the second oil line 12. The first oil inlet section 11c is configured to communicate with the outlet 402 of the oil pump 40 and the inlet 59 of the heat exchanger 50. The first oil outlet section 11d is configured to communicate the outlet 58 of the heat exchanger 50 with the other inlet 61a. The outlet 62 is configured to communicate the speed reducer accommodating cavity 700 with the motor accommodating cavity 800.

In embodiments shown in FIG. 8 and FIG. 10, the temperature control valve 60 not only controls, based on a temperature, the flow of the cooling oil flowing into the speed reducer accommodating cavity 700, but also allows a part of the cooling oil to flow into the motor accommodating cavity 800 quickly, so that the motor heats the cooling oil during working in a low-temperature environment, and the cooling oil in a system of the powertrain 2 accelerates cycle work, which helps improve efficiency of the powertrain 2.

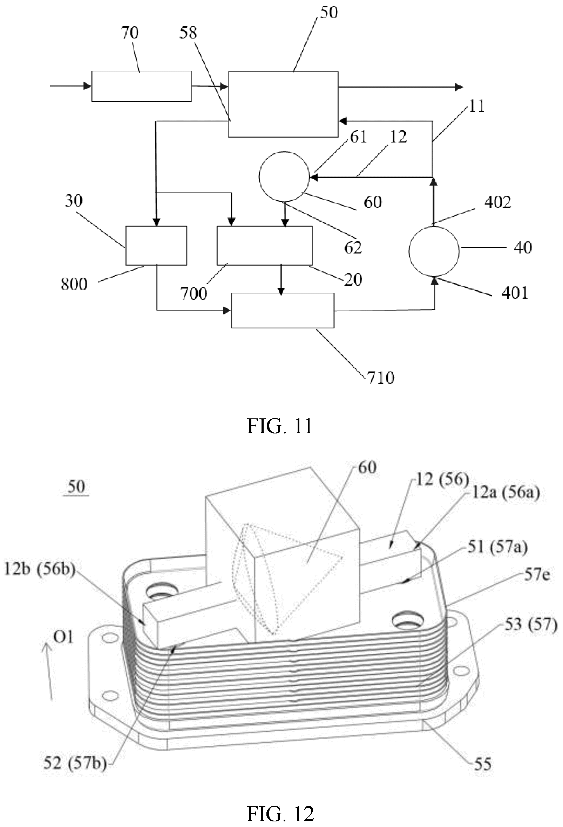

Refer to FIG. 11. FIG. 11 is a diagram of a structure of a powertrain 2 according to an embodiment of this application. In an embodiment, the first oil line 11 communicates with the outlet 402 of the oil pump 40, the heat exchanger 50, the motor accommodating cavity 800, and the speed reducer accommodating cavity bottom 710 in sequence. The second oil line 12 communicates with the outlet 402 of the oil pump 40, the temperature control valve 60, and the speed reducer accommodating cavity 700 in sequence. The first oil line 11 and the second oil line 12 do not cross or converge. In this way, after being pumped out by the oil pump 40, the low-temperature cooling oil at the speed reducer accommodating cavity bottom 710 flows into the second oil line 12, and flows out from the temperature control valve 60 and directly into the speed reducer accommodating cavity 700, for lubrication of the speed reducer 20, which helps quickly increase a temperature of the cooling oil. In this way, after being pumped out by the oil pump 40, the high-temperature cooling oil at the speed reducer accommodating cavity bottom 710 flows into the first oil line 11, and after heat exchange by the heat exchanger 50, the high-temperature cooling oil flows into both the speed reducer accommodating cavity 700 and the motor accommodating cavity 800, for cooling and lubrication of the speed reducer 20 and the motor 30.

In an embodiment, before flowing into the motor accommodating cavity 800, a part of the cooling oil flowing out of the outlet 58 of the heat exchanger 50 flows into the speed reducer accommodating cavity 700, to cool and lubricate the gear set of the speed reducer 20 when the ambient temperature is high.

Refer to FIG. 4. In an embodiment, the powertrain 2 further includes a third oil line 13 and a fourth oil line 14. An inlet 13a of the third oil line 13 is configured to communicate with the outlet 402 of the oil pump 40, and an outlet 13b of the third oil line 13 is configured to communicate with the inlet 11a of the first oil line 11 and the inlet 12a of the second oil line 12. An inlet 14a of the fourth oil line 14 is configured to communicate with the outlet 11b of the first oil line 11 and the outlet 12b of the second oil line 12, and an outlet 14b of the fourth oil line 14 is configured to directly communicate with the speed reducer accommodating cavity 700.

In this embodiment of this application, the cooling oil at the speed reducer accommodating cavity bottom 710 passes through the outlet 402 of the oil pump 40, the inlet 13a of the third oil line 13, the third oil line 13, the outlet 13b of the third oil line 13, the inlet 11a of the first oil line 11, the first oil line 11, the outlet 11b of the first oil line 11, the inlet 14a of the fourth oil line 14, and the fourth oil line 14 in sequence, and directly flows into the speed reducer 20 in the speed reducer accommodating cavity 700 from the outlet 14b of the fourth oil line 14. High-temperature cooling oil passes through the heat exchanger 50 for heat exchange, which helps reduce an oil temperature of the hot cooling oil, to cool and lubricate the speed reducer 20.

In this embodiment of this application, the cooling oil at the speed reducer accommodating cavity bottom 710 passes through the outlet 402 of the oil pump 40, the inlet 13a of the third oil line 13, the third oil line 13, the outlet 13b of the third oil line 13, the inlet 12a of the second oil line 12, the second oil line 12, the outlet 12b of the second oil line 12, the inlet 14a of the fourth oil line 14, the fourth oil line 14, and the outlet 14b of the fourth oil line 14 in sequence, and directly flows into the speed reducer 20 in the speed reducer accommodating cavity 700 for lubrication, so that low-temperature cooling oil does not pass through the heat exchanger 50, and quickly reaches the speed reducer 20. When the gear set of the speed reducer 20 works, the temperature of the cooling oil is raised, which helps quickly increase a temperature of cooling oil in the speed reducer accommodating cavity 700. Therefore, a viscosity of the cooling oil is reduced, and system oil resistance is reduced. This helps ensure normal operation of the oil pump 40, also helps reduce an oil churning loss of the speed reducer 20, and improves efficiency of the powertrain 2.

Refer to FIG. 9. In an embodiment, the powertrain 2 further includes a fifth oil line 15 and a motor accommodating cavity 800 (as shown in FIG. 2). The motor accommodating cavity 800 is configured to accommodate the motor 30. An inlet 15a of the fifth oil line 15 is configured to communicate with the outlet 11b of the first oil line 11 and the outlet 12b of the second oil line 12, and an outlet 15b of the fifth oil line 15 is configured to directly communicate with the motor accommodating cavity 800.

In this embodiment of this application, the motor accommodating cavity 800 is configured to accommodate the motor 30, and the motor 30 is configured to provide kinetic energy for the powertrain 2. The fifth oil line 15 is configured to transfer cooling oil to the motor 30 in the motor accommodating cavity 800 for cooling and lubrication. The cooling oil flows into the motor accommodating cavity 800 through the outlet 11b of the first oil line 11, the inlet 15a of the fifth oil line 15, the fifth oil line 15, and the outlet 15b of the fifth oil line 15 in sequence, for cooling and lubrication of the motor 30, which helps implement temperature rise control on the powertrain 2. In addition, the cooling oil flows into the motor accommodating cavity 800 through the outlet 12b of the second oil line 12, the inlet 15a of the fifth oil line 15, the fifth oil line 15, and the outlet 15b of the fifth oil line 15 in sequence, for lubrication of the motor 30.

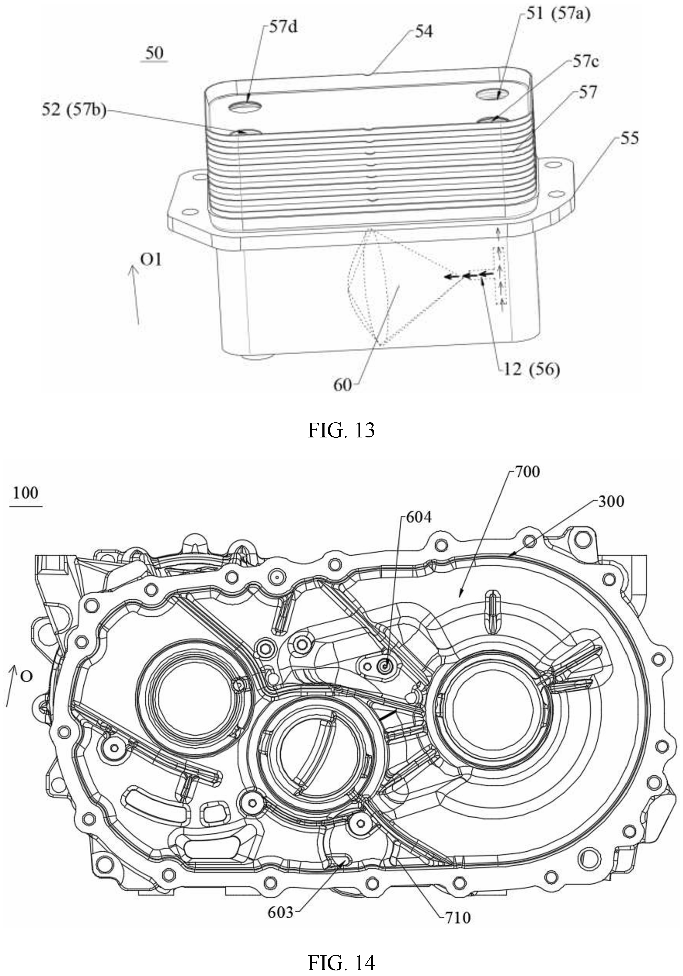

Refer to FIG. 12 and FIG. 13. FIG. 12 is a diagram of a structure of a heat exchanger 50 according to an embodiment of this application, and FIG. 13 is a diagram of a structure of a heat exchanger 50 according to an embodiment of this application. In an embodiment, the temperature control valve 60 and the second oil line 12 are stacked on the heat exchanger 50. The heat exchanger 50 includes an oil inlet 51 and an oil outlet 52. The oil inlet 51 is configured to communicate with the outlet 402 (as shown in FIG. 11) of the oil pump 40. The oil outlet 52 is configured to communicate with the speed reducer accommodating cavity 700 (as shown in FIG. 2). The second oil line 12 is connected in parallel to an oil line between the oil inlet 51 and the oil outlet 52. The inlet 12a of the second oil line 12 communicates with the oil inlet 51, and the outlet 12b of the second oil line 12 communicates with the oil outlet 52.

In this embodiment of this application, the temperature control valve 60 and the second oil line 12 are stacked on the heat exchanger 50, which helps reduce a pipeline layout and a pipeline length of the second oil line 12 in the powertrain 2, so that structures of the temperature control valve 60, the second oil line 12, and the heat exchanger 50 are more integrated. This reduces a volume of the powertrain 2 and facilitates miniaturization of the powertrain 2.

Still refer to FIG. 12 and FIG. 13. In an embodiment, the heat exchanger 50 is fastened to the housing 10 (as shown in FIG. 2), and the temperature control valve 60 and the second oil line 12 are stacked on a side that is of the heat exchanger 50 and that is away from the housing 10. In an embodiment, the temperature control valve 60 and the second oil line 12 are stacked between heat exchange plates 53 of the heat exchanger 50. In an embodiment, the temperature control valve 60 and the second oil line 12 are stacked between the heat exchanger 50 and the housing 10.

In this embodiment of this application, the second oil line 12 and the heat exchanger 50 may be integrated in a plurality of manners. As shown in FIG. 12, the temperature control valve 60 and the second oil line 12 are stacked on a side that is of the heat exchanger 50 and that is away from the housing 10, which facilitates installation and fastening of the heat exchanger 50 and the housing 10. The temperature control valve 60 and the second oil line 12 are stacked between the heat exchange plates 53 of the heat exchanger 50, so that the second oil line 12 is integrated in the heat exchanger 50 without occupying much space outside the heat exchanger 50. As shown in FIG. 13, the temperature control valve 60 and the second oil line 12 are stacked between the heat exchanger 50 and the housing 10, so that the low-temperature cooling oil in the housing 10 flows into the second oil line 12 more quickly, for lubrication of the speed reducer 20, to accelerate a temperature rise of the cooling oil more quickly, reduce a viscosity of the cooling oil, and reduce system oil resistance. This helps reduce an oil churning loss of the gear set of the speed reducer 20, and reduce a power loss of the powertrain 2. In an embodiment, the second oil line 12 is integrated in the housing 10, and the temperature control valve 60 is located in the housing 10. In this case, the heat exchanger 50 is fastened to a surface of the housing 10, and the temperature control valve 60 and the second oil line 12 do not occupy extra external space of the powertrain 2, so that the structure of the powertrain 2 is more integrated and miniaturized.

Still refer to FIG. 2 and FIG. 3. In an embodiment, the housing 10 includes an intermediate housing 100 and a speed reducer end cover 200. The intermediate housing 100 includes a speed reducer accommodating groove 300 and the second oil line 12 that are formed by integrated die casting (as shown in FIG. 3). The speed reducer accommodating groove 300 and the speed reducer end cover 200 enclose to form the speed reducer accommodating cavity 700. In an extension direction of the second oil line 12 (as shown in FIG. 3), the second oil inlet section 12c (as shown in FIG. 3), the temperature control valve 60 (as shown in FIG. 3), and the second oil outlet section 12d (as shown in FIG. 3) are arranged in sequence.

In this embodiment of this application, the intermediate housing 100 is formed by integrated die casting, and a process is simple. The speed reducer end cover 200 is configured to seal and cover the speed reducer accommodating groove 300 to form the speed reducer accommodating cavity 700. The speed reducer accommodating cavity 700 is configured to accommodate the gear set of the speed reducer 20. The second oil line 12 (as shown in FIG. 3) is formed in the intermediate housing 100 by integrated die casting. This helps save die-casting materials, reduce production costs, and reduce an additional pipeline layout, so that a layout of the powertrain 2 is more rational.

In this embodiment of this application, the temperature control valve 60 is located in the second oil line 12 (as shown in FIG. 3). After being pumped out by the oil pump 40 (as shown in FIG. 3), the cooling oil at the speed reducer accommodating cavity bottom 710 passes through the second oil inlet section 12c (as shown in FIG. 3), the temperature control valve 60 (as shown in FIG. 3), and the second oil outlet section 12d (as shown in FIG. 3) in sequence, and reaches the speed reducer accommodating cavity 700, for lubrication of the gear set of the speed reducer 20 in the speed reducer accommodating cavity 700. In this embodiment of this application, an extension direction of the second oil line 12 (as shown in FIG. 3) is perpendicular to the axial direction O of the powertrain, so that the second oil line 12 (as shown in FIG. 3) is formed in the intermediate housing 100 by die casting, and cooling oil is provided more quickly for lubrication of the speed reducer 20.

In this embodiment of this application, the intermediate housing 100 may also be referred to as an assembly housing 100, a die-casted housing 100, an electric drive housing 100, or the like.

Still refer to FIG. 2 and FIG. 3. In an embodiment, the housing 10 includes a motor end cover 400, and the intermediate housing 100 includes a motor accommodating groove 500 formed by integrated die casting.

In this embodiment of this application, the motor end cover 400 is configured to seal and cover the motor accommodating groove 500 to form a motor accommodating cavity 800. The motor accommodating cavity 800 is configured to accommodate the motor 30, and the motor 30 is configured to provide kinetic energy for the powertrain 2. The fifth oil line 15 (as shown in FIG. 2) cools and lubricates the motor 30, and the fifth oil line 15 may be integrated on the motor accommodating groove 500 or disposed outside the motor accommodating groove 500.

Still refer to FIG. 2, FIG. 3, and FIG. 14. FIG. 14 is a diagram of a structure of an intermediate housing 100 according to an embodiment of this application. In an embodiment, the intermediate housing 100 further includes an oil pump accommodating groove 600 and an oil outlet hole 604 (as shown in FIG. 14). The oil pump accommodating groove 600 is configured to accommodate the oil pump 40, the oil outlet is configured to communicate with the second oil line, and an opening of the oil outlet hole 604 faces the speed reducer accommodating cavity 700.

In an embodiment, an outlet 601 of the oil pump accommodating groove 600 communicates with the second oil inlet section 12c (as shown in FIG. 3), and the oil outlet hole 604 is configured to communicate the second oil outlet section 12d (as shown in FIG. 3) with the speed reducer accommodating groove 300.

In this embodiment of this application, after being pumped into the second oil inlet section 12c (as shown in FIG. 3) from the outlet 601 of the oil pump accommodating groove 600, the cooling oil flows into the speed reducer accommodating groove 300 from the oil outlet hole 604 through the temperature control valve 60 and the second oil outlet section 12d (as shown in FIG. 3), for lubrication of the gear set of the speed reducer 20 in the speed reducer accommodating groove 300. The opening of the oil outlet hole 604 faces the speed reducer accommodating cavity 700, so that cooling oil is more smoothly input into the speed reducer accommodating cavity 700. The oil outlet hole 604 faces an opening of the speed reducer accommodating cavity 700, so that the cooling oil may be further sprayed into an oil collecting groove (not shown in the figure), for lubrication of the gear set of the speed reducer 20. It should be noted that a position of the outlet 601 in FIG. 3 is a schematic position of the outlet 601. For example, the outlet 601 is disposed on an inner wall of the oil pump accommodating groove 600.

In this embodiment of this application, after being pumped out from the outlet 601 of the oil pump accommodating groove 600, the cooling oil passes through the second oil line 12 that is die-casted in the intermediate housing 10, and directly flows into the speed reducer accommodating cavity 700 without passing through a long pipeline, so that a path for flowing into the speed reducer accommodating cavity 700 is shorter, and oil resistance is reduced.

In an embodiment, the second oil line 12 is formed between the motor accommodating cavity 800 and an output shaft hole of the speed reducer, so that the second oil line 12 is shorter.

Still refer to FIG. 3. In an embodiment, the oil pump accommodating groove 600 includes a groove opening 602, and the groove opening 602 of the oil pump accommodating groove 600 is away from the speed reducer accommodating groove 300 in the axial direction O of the powertrain. This embodiment of this application facilitates installation and arrangement of the oil pump 40, facilitates smooth demolding of the intermediate housing 100, and further helps reduce occupied space of the powertrain 2 in the axial direction O of the powertrain.

Refer to FIG. 3. In an embodiment, a groove wall of the oil pump accommodating groove 600 includes two outlets 605 and 606: a first outlet 605 and a second outlet 606. The first outlet 605 is configured to communicate with the inlet 11a (as shown in FIG. 3) of the first oil line 11, and the second outlet 606 is configured to communicate with the inlet 12a (as shown in FIG. 3) of the second oil line 12. The second outlet 606 and the first outlet 605 are arranged in the axial direction O of the powertrain between the speed reducer accommodating groove 300 and the groove opening 602 of the oil pump accommodating groove 600. The second outlet 606 and the first outlet 605 are distributed at intervals in a circumferential direction of the oil pump accommodating groove 600.

In this embodiment of this application, the second outlet 606 and the first outlet 605 are located on the groove wall of the oil pump accommodating groove 600, so that the oil pump 40 can more smoothly pump 40 cooling oil into the second outlet 606 and the first outlet 605. The first outlet 605 is configured to communicate with the inlet 11a (as shown in FIG. 3) of the first oil line 11. The oil pump 40 transfers the cooling oil to the first oil line 11 (as shown in FIG. 3) by using the first outlet 605. The cooling oil in the first oil line 11 (as shown in FIG. 3) passes through the heat exchanger 50 for heat exchange and cooling, and is input to the motor accommodating cavity 800, for cooling and lubrication of the motor 30 in the motor accommodating cavity 800. The second outlet 606 and the first outlet 605 are formed by using a drilling process, and the process is simple, so that the cooling oil pumped by the oil pump 40 is distributed. The second outlet 606 is configured to communicate with the inlet 12a (as shown in FIG. 3) of the second oil line 12, and the oil pump 40 directly transfers the cooling oil to the speed reducer accommodating cavity 700 through the second outlet 606, for lubrication of the gear set of the speed reducer 20 in the speed reducer accommodating cavity 700. It should be noted that positions of the two outlets 605 and 606 in FIG. 3 are schematic positions of the two outlets 605 and 606.

In this embodiment of this application, the second outlet 606 and the first outlet 605 are arranged between the speed reducer accommodating groove 300 and the groove opening 602 of the oil pump accommodating groove 600 in the axial direction O of the powertrain, which helps reduce occupied space of the powertrain 2 in the axial direction O of the powertrain. In addition, this helps the cooling oil line flow from the second outlet 606 into the speed reducer accommodating cavity 700 through a shorter path, and reduces a power loss.

In this embodiment of this application, the second outlet 606 and the first outlet 605 are distributed at intervals in the circumference of the oil pump accommodating groove 600, which facilitates interval arrangement of the first oil line 11 (as shown in FIG. 3) communicating with the first outlet 605 and the second oil line 12 (as shown in FIG. 3) communicating with the second outlet 606, so that a layout of the pipeline between the first oil line 11 (as shown in FIG. 3) and the second oil line 12 (as shown in FIG. 3) is more rational.

Still refer to FIG. 3 and FIG. 14. In an embodiment, the oil pump accommodating groove 600 further includes an accommodating groove oil inlet 603, and the accommodating groove oil inlet 603 is configured to communicate with the speed reducer accommodating cavity 700.

In this embodiment of this application, cooling oil is stored at the speed reducer accommodating cavity bottom 710. The accommodating groove oil inlet 603 is configured to input the cooling oil at the speed reducer accommodating cavity bottom 710 into the oil pump accommodating groove 600, and then the cooling oil enters the oil pump 40 and is discharged to the second outlet 606 and the first outlet 605. The accommodating groove oil inlet 603 is configured to communicate with the speed reducer accommodating cavity 700. The cooling oil at the speed reducer accommodating cavity bottom 710 passes through the accommodating groove oil inlet 603 and the oil pump accommodating groove 600 in sequence, and is pumped into the second outlet 606 by the oil pump 40, and flows into the speed reducer accommodating cavity 700 from the second oil line 12 (as shown in FIG. 3), for lubrication of the gear set of the speed reducer 20. Then, the cooling oil falls back to the speed reducer accommodating cavity bottom 710, to form a circulation loop of the cooling oil. The accommodating groove oil inlet 603 is also referred to as an oil return hole.

Still refer to FIG. 2 and FIG. 3. In an embodiment, the powertrain 2 includes a housing 10, a heat exchanger 50, an oil pump accommodating groove 600, a temperature control valve 60 (as shown in FIG. 2), a first oil line 11 (as shown in FIG. 2), a second oil line 12 (as shown in FIG. 2), a third oil line 13, a fourth oil line 14, and a fifth oil line 15. The housing 10 includes a speed reducer accommodating cavity 700 and a motor accommodating cavity 800. The speed reducer accommodating cavity 700 is configured to accommodate a gear set of a speed reducer 20. The motor accommodating cavity 800 is configured to accommodate a motor 30. A speed reducer accommodating cavity bottom 710 is configured to accommodate cooling oil. The oil pump accommodating groove 600 is configured to accommodate an oil pump 40. An inlet 401 of the oil pump 40 is configured to communicate with the speed reducer accommodating cavity bottom 710. The first oil line 11 (as shown in FIG. 2) and the second oil line 12 (as shown in FIG. 2) are respectively configured to communicate with an outlet 605 of the oil pump accommodating groove 600 and the speed reducer accommodating cavity 700. The first oil line 11 (as shown in FIG. 2) and the second oil line 12 (as shown in FIG. 2) are connected in parallel. The heat exchanger 50 is located in the first oil line 11 (as shown in FIG. 2), and the heat exchanger 50 is configured to cool the cooling oil. The temperature control valve 60 is located at a valve body position A1 (as shown in FIG. 2).

In this embodiment of this application, cooling oil at the speed reducer accommodating cavity bottom 710 flows into the oil pump accommodating groove 600 from an accommodating groove oil inlet 603 of the oil pump accommodating groove 600, and the oil pump 40 pumps the cooling oil in the oil pump accommodating groove 600 from a first outlet 605 of the oil pump accommodating groove 600. The cooling oil passes through the third oil line 13 (as shown in FIG. 2), then flows through the first oil line 11 (as shown in FIG. 2), flows into the fifth oil line 15 from the fourth oil line 14 after being cooled by the heat exchanger 50 in the first oil line 11 (as shown in FIG. 2), and flows into the speed reducer accommodating cavity 700 or the motor accommodating cavity 800 from the fifth oil line 15, for cooling and lubrication of the speed reducer 20 or the motor 30. Alternatively, cooling oil at the speed reducer accommodating cavity bottom 710 flows into the oil pump accommodating groove 600 from an accommodating groove oil inlet 603 of the oil pump accommodating groove 600, and the oil pump 40 pumps the cooling oil in the oil pump accommodating groove 600 from a first outlet 605 of the oil pump accommodating groove 600. The cooling oil passes through the third oil line 13 (as shown in FIG. 2), then flows into the fourth oil line 14 through the second oil inlet section 12c (as shown in FIG. 2) of the second oil line 12 (as shown in FIG. 2), the temperature control valve 60 (as shown in FIG. 2), and the second oil outlet section 12d (as shown in FIG. 2) of the second oil line 12, immediately flows into the fifth oil line 15, and flows from the fifth oil line 15 into the speed reducer accommodating cavity 700 or the motor accommodating cavity 800, for lubrication of the speed reducer 20 or the motor 30.

Still refer to FIG. 2 and FIG. 3. In an embodiment, the first oil line 11 and/or the second oil line 12 are/is formed in the speed reducer end cover 200 by integrated die casting, so that structure integration of the powertrain 2 is higher, which is prone to miniaturization of the powertrain 2.

In an embodiment, an external pipeline may also be used as the second oil line 12, and two openings communicating with the inlet 12a and the outlet 12b of the second oil line 12 are formed in the speed reducer end cover 200.

Still refer to FIG. 2 and FIG. 3. In an embodiment, the temperature control valve 60 is located at an intersection, namely, a valve body position A2 in FIG. 2, of the inlet 11a (as shown in FIG. 2) of the first oil line 11 and the inlet 12a (as shown in FIG. 2) of the second oil line 12.

In this embodiment of this application, cooling oil at the speed reducer accommodating cavity bottom 710 flows into the oil pump accommodating groove 600 from the oil inlet 51 of the oil pump accommodating groove 600, and the oil pump 40 pumps the cooling oil in the oil pump accommodating groove 600 from the first outlet 605 of the oil pump accommodating groove 600. The cooling oil passes through the third oil line 13 (as shown in FIG. 2), then flows through the temperature control valve 60 and the first oil line 11 (as shown in FIG. 2), flows into the fifth oil line 15 (as shown in FIG. 2) from the fourth oil line 14 after being cooled by the heat exchanger 50 in the first oil line 11 (as shown in FIG. 2), and flows into the speed reducer accommodating cavity 700 or the motor accommodating cavity 800 from the fifth oil line 15, for cooling and lubrication of the speed reducer 20 or the motor 30. Alternatively, cooling oil at the speed reducer accommodating cavity bottom 710 flows into the oil pump accommodating groove 600 from the accommodating groove oil inlet 603 of the oil pump accommodating groove 600, and the oil pump 40 pumps the cooling oil in the oil pump accommodating groove 600 from the first outlet 605 of the oil pump accommodating groove 600. The cooling oil passes through the third oil line 13, then flows into the fourth oil line 14 through the temperature control valve 60 and the second oil line 12 (as shown in FIG. 2), immediately flows into the fifth oil line 15, and flows from the fifth oil line 15 into the speed reducer accommodating cavity 700 or the motor accommodating cavity 800, for lubrication of the speed reducer 20 or the motor 30.

Still refer to FIG. 2 and FIG. 3. In an embodiment, the temperature control valve 60 is located at an intersection, namely, a valve body position A3 in FIG. 2, of the outlet 11b (as shown in FIG. 2) of the first oil line 11 and the outlet 12b (as shown in FIG. 2) of the second oil line 12.

In this embodiment of this application, cooling oil at the speed reducer accommodating cavity bottom 710 flows into the oil pump accommodating groove 600 from the oil inlet 51 of the oil pump accommodating groove 600, and the oil pump 40 pumps the cooling oil in the oil pump accommodating groove 600 from the first outlet 605 of the oil pump accommodating groove 600. The cooling oil passes through the third oil line 13 (as shown in FIG. 2) and the first oil line 11 (as shown in FIG. 2), flows into the temperature control valve 60 after being cooled by the heat exchanger 50 in the first oil line 11 (as shown in FIG. 2), immediately flows into the fifth oil line 15 from the fourth oil line 14, and flows into the speed reducer accommodating cavity 700 or the motor accommodating cavity 800 from the fifth oil line 15, for cooling and lubrication of the speed reducer 20 or the motor 30. Alternatively, cooling oil at the speed reducer accommodating cavity bottom 710 flows into the oil pump accommodating groove 600 from the accommodating groove oil inlet 603 of the oil pump accommodating groove 600, and the oil pump 40 pumps the cooling oil in the oil pump accommodating groove 600 from the first outlet 605 of the oil pump accommodating groove 600. The cooling oil flows into the temperature control valve 60 through the third oil line 13 and the second oil line 12 (as shown in FIG. 2), immediately flows into the fourth oil line 14, then flows into the fifth oil line 15, and flows from the fifth oil line 15 into the speed reducer accommodating cavity 700 or the motor accommodating cavity 800, for lubrication of the speed reducer 20 or the motor 30.

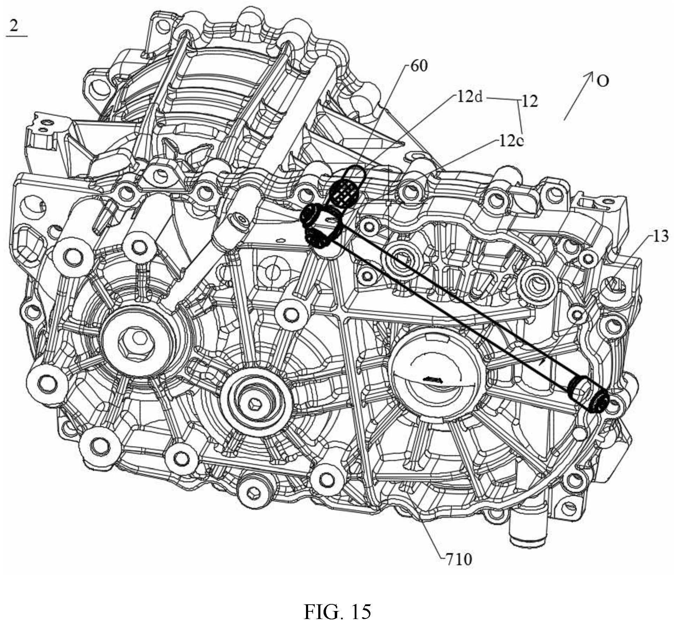

Refer to FIG. 2, FIG. 3, and FIG. 15. FIG. 15 is a diagram of a structure of a powertrain 2 according to an embodiment of this application. In an embodiment, cooling oil at the speed reducer accommodating cavity bottom 710 flows into the oil pump accommodating groove 600 from the accommodating groove oil inlet 603 of the oil pump accommodating groove 600, and the oil pump 40 pumps the cooling oil in the oil pump accommodating groove 600 from the first outlet 605 of the oil pump accommodating groove 600. The cooling oil passes through the third oil line 13 (as shown in FIG. 2), then flows through the second oil inlet section 12c (as shown in FIG. 15) of the second oil line 12 and the temperature control valve 60 (as shown in FIG. 15), and directly flows into the speed reducer accommodating cavity 700 from the second oil inlet section 12d (as shown in FIG. 15). This helps the cooling oil quickly reach the speed reducer 20 in the speed reducer accommodating cavity 700, and helps quickly increase a temperature of low-temperature cooling oil in the speed reducer accommodating cavity 700. In this embodiment of this application, the second oil line 12 is formed on the speed reducer end cover 200 by integrated die casting, and an axial direction of the second oil line 12 is parallel to the axial direction O of the powertrain. It should be noted that, the second oil line 12 in FIG. 15 is used to indicate a position of the second oil line 12. In an actual product, the second oil line 12 may be formed inside the speed reducer end cover 200 by integrated die casting.

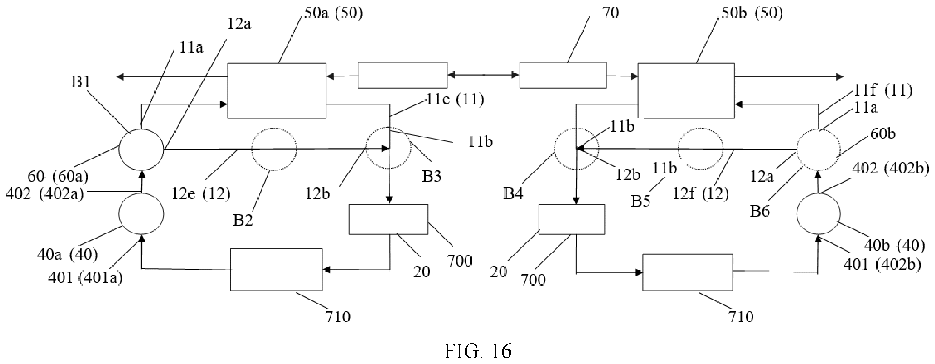

Refer to FIG. 16. FIG. 16 is a diagram of a structure of a powertrain 2 according to an embodiment of this application. In an embodiment, the powertrain 2 includes two heat exchangers 50a and 50b, two oil pumps 40a and 40b, two first oil lines 11e and 11f, two second oil lines 12e and 12f, and one temperature control valve 60. The housing 10 includes two speed reducer accommodating cavities 700 (as shown in FIG. 14), and an inlet 401 of each oil pump 40 is configured to communicate with one speed reducer accommodating cavity bottom 710. The two first oil lines 11e and 11f are respectively connected in parallel to the two corresponding second oil lines 12e and 12f. One first oil line 11 and one second oil line 12 are both configured to communicate with an outlet 402 of one oil pump 40 and one speed reducer accommodating cavity 700. One heat exchanger 50 is located in one first oil line 11. One temperature control valve 60 is located in one second oil line 12 or at an intersection of one second oil line 12 and one first oil line 11 connected in parallel to the second oil line 12, and one temperature control valve 60 is configured to control a flow proportion between one first oil line 11 and one second oil line 12 that are connected in parallel.

As shown in FIG. 16, in this embodiment of this application, the heat exchanger 50 is configured to cool cooling oil, the speed reducer accommodating cavity 700 is configured to accommodate the gear set of the speed reducer 20, and the oil pump 40 is located at the speed reducer accommodating cavity bottom 710, so that the inlet 401 of the oil pump 40 can communicate with the speed reducer accommodating cavity bottom 710. This helps the oil pump 40 provide oil pressure for the cooling oil at the speed reducer accommodating cavity bottom 710, and drive the cooling oil to be transmitted to the speed reducer 20, for cooling and lubrication of the speed reducer 20. One temperature control valve 60 is configured to control a flow proportion between one first oil line 11 and one second oil line 12 that are connected in parallel. This helps control flows of cooling oil in one first oil line 11 and one second oil line 12, and improves efficiency of the powertrain 2.

In this embodiment of this application, that the two first oil lines 11e and 11f are respectively connected in parallel to the two corresponding second oil lines 12e and 12f means that the first oil line 11e is connected in parallel to the second oil line 12e, and that the first oil line 11f is connected in parallel to the second oil line 12f. An inlet 11a of each first oil line 11 communicates with an inlet 12a of each second oil line 12, and an outlet 11b of each first oil line 11 communicates with outlets 12b of the two second oil lines 12.

In this embodiment of this application, as shown in FIG. 16, one temperature control valve 60 may be located at any one of a valve body position B1, a valve body position B2, a valve body position B3, a valve body position B4, a valve body position B5, and a valve body position B6.

In this embodiment of this application, a relatively large amount of cooling oil flows into one second oil line 12 at a low temperature, and a relatively large amount of cooling oil flows into one first oil line 11 at a high temperature. The one first oil line 11 and the one second oil line 12 are disposed to help reduce further cooling of the cooling oil at a low temperature. The gear set of one speed reducer 20 generates heat during working, which helps quickly increase a temperature of cooling oil in the speed reducer accommodating cavity 700. Therefore, a viscosity of the cooling oil is reduced, and system oil resistance is reduced. This helps ensure normal operation of one oil pump 40, also helps reduce an oil churning loss of one speed reducer 20, and improves efficiency of the powertrain 2.

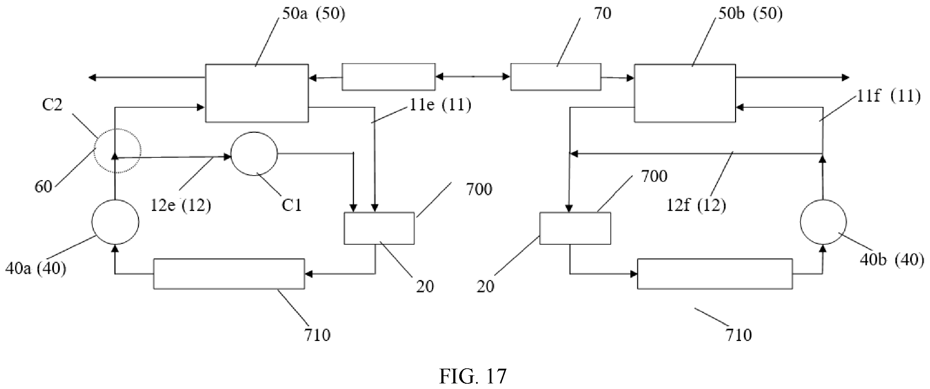

Refer to FIG. 14 and FIG. 17. FIG. 17 is a diagram of a structure of a powertrain 2 according to an embodiment of this application. In an embodiment, the powertrain 2 includes two heat exchangers 50a and 50b, two oil pumps 40a and 40b, two first oil lines 11e and 11f, two second oil lines 12e and 12f, and at least one temperature control valve 60. When one temperature control valve 60 is located at a valve body position C1 or a valve body position C2 in the second oil line 12e, cooling oil may directly flow into one speed reducer 20 from one temperature control valve 60, instead of flowing into the speed reducer accommodating cavity 700 (as shown in FIG. 14) after converging with cooling oil flowing out of the first oil line 11e. This helps one speed reducer 20 to receive low-temperature cooling oil more quickly, where the cooling oil is used for lubrication of a gear set of one speed reducer 20. This helps quickly increase a temperature of the cooling oil, reduce a viscosity of the cooling oil, and reduce system oil resistance, helps ensure normal operation of one oil pump 40, and helps reduce an oil churning loss of one speed reducer 20, thereby improving efficiency of the powertrain 2.

Refer to FIG. 16. In an embodiment, the powertrain 2 includes two heat exchangers 50a and 50b, two oil pumps 40a and 40b, two first oil lines 11e and 11f, two second oil lines 12e and 12f, and two temperature control valves 60a and 60b. The housing 10 (as shown in FIG. 2) includes two speed reducer accommodating cavities 700 (as shown in FIG. 14), and an inlet 401 of each oil pump 40 is configured to communicate with one speed reducer accommodating cavity bottom 710. The two first oil lines 11e and 11f are respectively connected in parallel to the two corresponding second oil lines 12e and 12f. The first oil line 11e and the second oil line 12e are configured to communicate an outlet 402a of the oil pump 40a with one speed reducer accommodating cavity 700. The heat exchanger 50a is located in the first oil line 11e. The temperature control valve 60a is located in the second oil line 12e or at an intersection of the second oil line 12e and the first oil line 11e connected in parallel to the second oil line 12e, and the other temperature control valve 60b is located in the other second oil line 12f or at an intersection of the other second oil line 12f and the other first oil line 11f connected in parallel to the second oil line 12f. The two temperature control valves 60a and 60b are respectively configured to control flow proportions between the two first oil lines 11e and 11f and the two second oil lines 12e and 12f that are connected in parallel.

In this embodiment of this application, as shown in FIG. 16, the temperature control valve 60a of the two temperature control valves 60a and 60b may be located at any one of a valve body position B1, a valve body position B2, and a valve body position B3, and the other temperature control valve 60b may be located at any one of a valve body position B4, a valve body position B5, and a valve body position B6.

In this embodiment of this application, the two temperature control valves 60a and 60b perform control at the same time, so that a relatively large amount of cooling oil flows into the two second oil lines 12e and 12f at a low temperature, and a relatively large amount of cooling oil flows into the two first oil lines 11e and 11f at a high temperature. The two first oil lines 11e and 11f and the two second oil lines 12e and 12f are disposed to reduce heat dissipation of the cooling oil at a low temperature. In addition, the gear set of the speed reducer 20 generates heat during working, which helps quickly increase a temperature of cooling oil in the speed reducer accommodating cavity 700. Therefore, a viscosity of the cooling oil is reduced, and system oil resistance is reduced. This helps ensure normal operation of the two oil pumps 40a and 40b, also helps reduce an oil churning loss of one speed reducer 20, and improves efficiency of the powertrain 2.

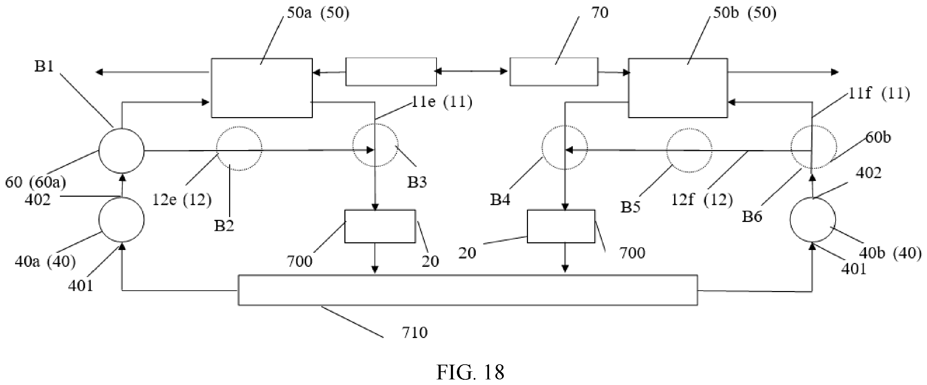

Refer to FIG. 18. FIG. 18 is a diagram of a structure of a powertrain 2 according to an embodiment of this application. In an embodiment, the housing 10 includes two speed reducer accommodating cavities 700 (as shown in FIG. 14). Two speed reducer accommodating cavity bottoms 710 communicate with each other.

In this embodiment of this application, cooling oil is stored at the speed reducer accommodating cavity bottoms 710, and the two speed reducer accommodating cavity bottoms 710 communicate with each other, so that the cooling oil in the housing 10 is converged and connected. Therefore, when the housing 10 (as shown in FIG. 2) includes only one temperature control valve 60, the two speed reducer accommodating cavity bottoms 710 communicate with each other, which helps quickly increase a temperature of the low-temperature cooling oil in the housing 10, so that the two oil pumps 40a and 40b work quickly and normally.

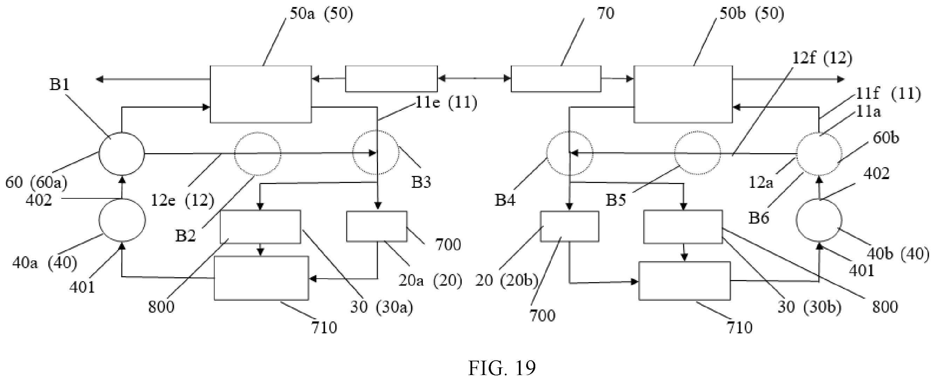

Refer to FIG. 19. FIG. 19 is a diagram of a structure of a powertrain 2 according to an embodiment of this application. In an embodiment, the powertrain 2 includes two heat exchangers 50a and 50b, two oil pumps 40a and 40b, two first oil lines 11e and 11f, two second oil lines 12e and 12f, and one temperature control valve 60. The housing 10 includes two speed reducer accommodating cavities 700 (as shown in FIG. 14) and two motor accommodating cavities 800 (as shown in FIG. 3), and an inlet 401 of each oil pump 40 is configured to communicate with one speed reducer accommodating cavity bottom 710. The two first oil lines 11e and 11f are respectively connected in parallel to the two corresponding second oil lines 12e and 12f. One first oil line 11 and one second oil line 12 are both configured to communicate with an outlet 402 of one oil pump 40, one speed reducer accommodating cavity 700, and motor accommodating cavity 800. One heat exchanger 50 is located in one first oil line 11. The temperature control valve 60 is located in one second oil line 12 or at an intersection of one second oil line 12 and one first oil line 11 connected in parallel to the second oil line 12. The temperature control valve 60 is configured to control a flow proportion between one first oil line 11 and one second oil line 12 that are connected in parallel.

In this embodiment of this application, as shown in FIG. 19, the temperature control valve 60 may be located at any one of a valve body position B1, a valve body position B2, a valve body position B3, a valve body position B4, a valve body position B5, and a valve body position B6.

In this embodiment of this application, a relatively large amount of cooling oil flows into one second oil line 12 at a low temperature. The gear set of one speed reducer 20 and one motor 30 generate heat during working, which helps quickly increase a temperature of cooling oil in the speed reducer accommodating cavity 700. Therefore, a viscosity of the cooling oil is reduced, and system oil resistance is reduced. This helps ensure normal operation of one oil pump 40, also helps reduce an oil churning loss of one speed reducer 20, and improves efficiency of the powertrain 2. A relatively large amount of cooling oil flows into one first oil line 11 at a high temperature. In other words, a relatively large amount of cooling oil flows through one heat exchanger 50 for cooling and heat exchange, so that cooling oil in one first oil line 11 cools and lubricates one speed reducer 20 and one motor 30, which is prone to temperature rise control on the powertrain 2.

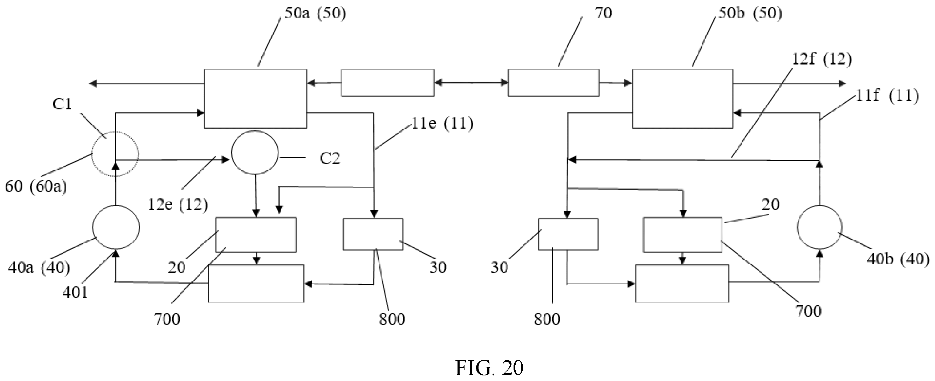

Refer to FIG. 20. FIG. 20 is a diagram of a structure of a powertrain 2 according to an embodiment of this application. In an embodiment, when one temperature control valve 60 is located at a valve body position C1 or a valve body position C2 in the second oil line 12, the cooling oil may directly flow into one speed reducer 20 from the temperature control valve 60, and does not need to converge with the cooling oil cooled by the heat exchanger 50 in the first oil line 11. This helps one speed reducer 20 to receive low-temperature cooling oil more quickly, where the cooling oil is used for lubrication of a gear set of one speed reducer 20. This helps quickly increase a temperature of the cooling oil, reduce a viscosity of the cooling oil, and reduce system oil resistance, helps ensure normal operation of one oil pump 40, and helps reduce an oil churning loss of one speed reducer 20, thereby improving efficiency of the powertrain 2.

Still refer to FIG. 19. In an embodiment, the powertrain 2 includes two heat exchangers 50a and 50b, two oil pumps 40a and 40b, two first oil lines 11e and 11f, two second oil lines 12e and 12f, and two temperature control valves 60a and 60b. The housing 10 includes two speed reducer accommodating cavities 700 (as shown in FIG. 14) and two motor accommodating cavities 800 (as shown in FIG. 3). Each motor accommodating cavity 800 is configured to accommodate one motor 30. An inlet 401 of each oil pump 40 is configured to communicate with one speed reducer accommodating cavity bottom 710. The two first oil lines 11e and 11f are respectively connected in parallel to the two corresponding second oil lines 12e and 12f. One first oil line 11 and one second oil line 12 are both configured to communicate with an outlet 402 of the oil pump 40, one speed reducer accommodating cavity 700, and one motor accommodating cavity 800. One heat exchanger 50 is located in one first oil line 11. The temperature control valve 60a is located in the second oil line 12e or at an intersection of the second oil line 12e and the first oil line 11e connected in parallel to the second oil line 12e, and the other temperature control valve 60b is located in the other second oil line 12f or at an intersection of the other second oil line 12f and the other first oil line 11f connected in parallel to the second oil line 12f. The two temperature control valves 60a and 60b are respectively configured to control flow proportions between the two first oil lines 11e and 11f and the two second oil lines 12e and 12f that are connected in parallel.

In this embodiment of this application, as shown in FIG. 19, the temperature control valve 60a of the two temperature control valves 60a and 60b may be located at any one of a valve body position B1, a valve body position B2, and a valve body position B3, and the other temperature control valve 60b may be located at any one of a valve body position B4, a valve body position B5, and a valve body position B6.

In this embodiment of this application, the two temperature control valves 60a and 60b work at the same time, and a relatively large amount of cooling oil flows into the two second oil lines 12e and 12f at a low temperature. The two first oil lines 11e and 11f and the two second oil lines 12e and 12f are disposed to reduce heat dissipation of the cooling oil at a low temperature. In addition, the gear sets of the two speed reducers 20a and 20b and the two motors 30a and 30b generate heat during working, which helps quickly increase a temperature of cooling oil in the two speed reducer accommodating cavities 700. Therefore, a viscosity of the cooling oil is reduced, and system oil resistance is reduced. This helps ensure normal operation of the two oil pumps 40a and 40b, also helps reduce an oil churning loss of the two speed reducers 20a and 20b, and improves efficiency of the powertrain 2. A relatively large amount of cooling oil flows into the two first oil lines 11e and 11f at a high temperature, and more hot-cooling oil flows into the two heat exchangers 50a and 50b for cooling. This helps cooling and lubrication of the two speed reducers 20a and 20b or the two motors 30a and 30b when the cooling oil flows into the two speed reducer accommodating cavities 700 or the two motor accommodating cavities 800. This helps implement temperature rise control on the powertrain 2 and ensure normal operation of the powertrain 2. The two temperature control valves 60a and 60b are respectively configured to control flow proportions between the two first oil lines 11e and 11f and the two second oil lines 12e and 12f that are connected in parallel, which helps improve efficiency of the powertrain 2.

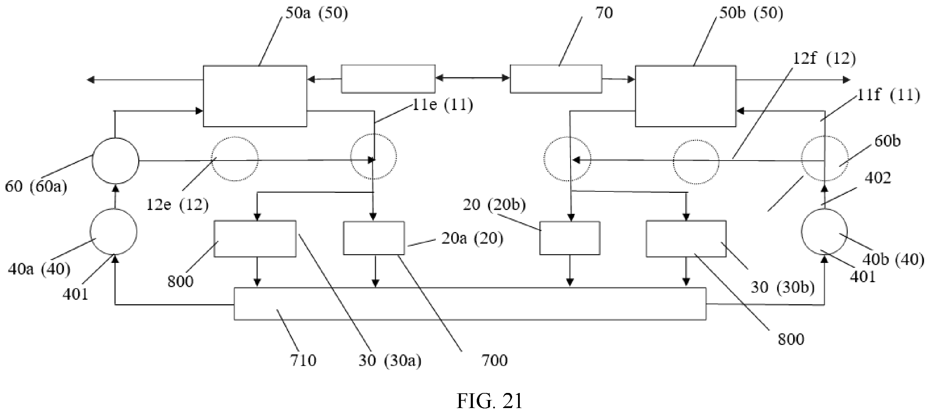

Refer to FIG. 21. FIG. 21 is a diagram of a structure of a powertrain 2 according to an embodiment of this application. In an embodiment, the housing 10 includes two speed reducer accommodating cavities 700 (as shown in FIG. 14) and two motor accommodating cavities 800 (as shown in FIG. 3), and the two speed reducer accommodating cavity bottoms 710 communicate with each other.

In this embodiment of this application, cooling oil is stored at the speed reducer accommodating cavity bottoms 710, and the two speed reducer accommodating cavity bottoms 710 communicate with each other, so that the cooling oil in the housing 10 is converged and connected. When the gear set of the speed reducer 20 and the motor 30 in the housing 10 work, a large amount of heat is generated. This helps quickly increase a temperature of the low-temperature cooling oil in the housing 10, so that the two oil pumps 40a and 40b work quickly and normally, and the high-temperature cooling oil in the housing 10 is cooled more quickly.

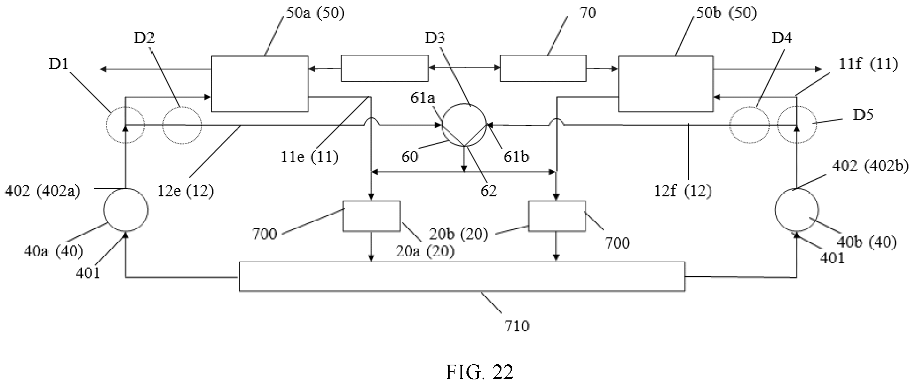

Refer to FIG. 22. FIG. 22 is a diagram of a structure of a powertrain 2 according to an embodiment of this application. In an embodiment, two speed reducer accommodating cavity bottoms 710 communicate with each other, and two second oil lines 12e and 12f communicate with each other. One temperature control valve 60 is located at a position at which the two second oil lines 12e and 12f communicate with each other. One temperature control valve 60 includes two inlets 61a and 61b and one outlet 62. The second oil line 12e is configured to communicate with an outlet 402a of the oil pump 40a, one inlet 61a of one temperature control valve 60, one outlet 62 of one temperature control valve 60, and one speed reducer accommodating cavity 700, and the other second oil line 12f is configured to communicate with an outlet 402b of the other oil pump 40b, the other inlet 61b of one temperature control valve 60, one outlet 62 of one temperature control valve 60, and the other speed reducer accommodating cavity 700.

In this embodiment of this application, the two speed reducer accommodating cavities 700 (as shown in FIG. 14) are respectively configured to accommodate two speed reducers 20a and 20b, and the two second oil lines 12e and 12f communicate with each other, so that the two first oil lines 11e and 11f and the two second oil lines 12e and 12f can be controlled by using one temperature control valve 60. After being pumped out by the outlet 402a of the oil pump 40a, cooling oil at the speed reducer accommodating cavity bottom 710 flows into one speed reducer accommodating cavity 700 through the second oil line 12e, one inlet 61a of one temperature control valve 60, and the outlet 62 of one temperature control valve 60, for lubrication of one speed reducer 20a. After being pumped out by the outlet 402b of the other oil pump 40b, cooling oil at the speed reducer accommodating cavity bottom 710 flows into the other speed reducer accommodating cavity 700 through the other second oil line 12f, the other inlet 61b of the temperature control valve 60, and the outlet 62 of the temperature control valve 60, for lubrication of the other speed reducer 20b.

In this embodiment of this application, one temperature control valve 60 is located at a position at which the two second oil lines 12e and 12f communicate with each other, so that one temperature control valve 60 can simultaneously control flows of the cooling oil flowing through the two second oil lines 12e and 12f, and one temperature control valve 60 can be used to implement a control effect of two temperature control valves 60.

Still refer to FIG. 22. In an embodiment, as shown in FIG. 22, one temperature control valve 60 may be located at any one of a valve body position D1, a valve body position D2, a valve body position D3, a valve body position D4, and a valve body position D5.

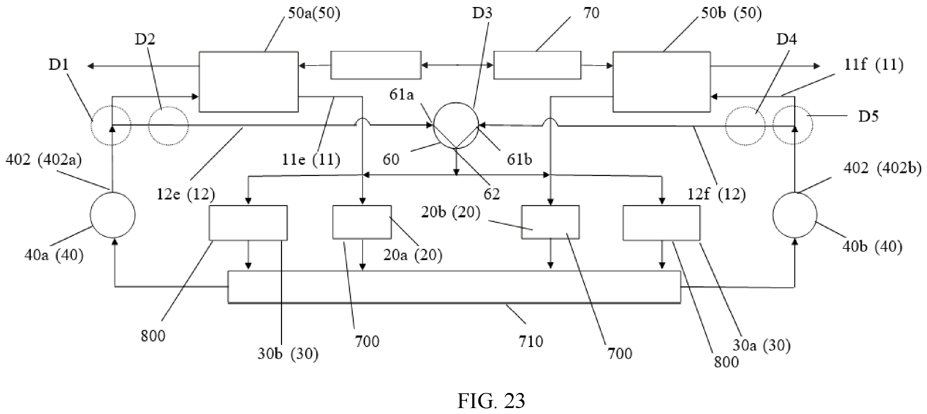

Refer to FIG. 23. FIG. 23 is a diagram of a structure of a powertrain 2 according to an embodiment of this application. In an embodiment, the housing 10 further includes two motor accommodating cavities 800 (as shown in FIG. 3) and two motors 30a and 30b. In this embodiment of this application, one temperature control valve 60 may be located at any one of a valve body position D1, a valve body position D2, a valve body position D3, a valve body position D4, and a valve body position D5.

In this embodiment of this application, the two speed reducer accommodating cavities 700 are respectively configured to accommodate two speed reducers 20a and 20b, the two motor accommodating cavities 800 are respectively configured to accommodate two motors 30a and 30b, and the two second oil lines 12e and 12f communicate with each other, so that the two first oil lines 11e and 11f and the two second oil lines 12e and 12f can be controlled by using one temperature control valve 60.

Still refer to FIG. 12 and FIG. 13. In an embodiment, the heat exchanger 50 includes a temperature control valve 60, a valve channel 56, and a plurality of circulation plates 57. The plurality of circulation plates 57 are stacked, and each circulation plate 57 includes four openings, where two openings 57a and 57b are used for circulating cooling oil, and the other two openings 57c and 57d are used for circulating coolant. The temperature control valve 60 and the valve channel 56 are arranged on one side of one circulation plate 57, the temperature control valve 60 is located in the valve channel 56, an inlet 56a and an outlet 56b of the valve channel 56 respectively communicate with the two openings 57a and 57b of one circulation plate 57, and the temperature control valve 60 is configured to control a flow of the valve channel 56.

In this embodiment of this application, the heat exchanger 50 and the valve channel 56 are arranged in an integrated manner. Cooling oil or coolant flowing on the plurality of circulation plates 57 forms a plurality of sub-oil passages or sub-liquid passages in the heat exchanger 50. The sub-oil passages and the sub-liquid passages are stacked, which helps increase a heat exchange area of circulation of the cooling oil and the coolant, and helps improve cooling efficiency of the cooling oil. The two openings 57a and 57b and the other two openings 57c and 57d are arranged diagonally, which facilitates convection between the cooling oil and the coolant in the heat exchanger 50, and improves cooling efficiency.

In this embodiment of this application, the two openings 57a and 57b are respectively a heat exchange oil inlet hole 57a and a heat exchange oil outlet hole 57b. The heat exchange oil inlet hole 57a communicates with the inlet 59 (as shown in FIG. 9) of the heat exchanger 50, the heat exchange oil outlet hole 57b communicates with the outlet 58 (as shown in FIG. 9) of the heat exchanger 50, and the inlet 56a of the valve channel 56 communicates with the heat exchange oil inlet hole 57a, and the outlet 56b of the valve channel 56 communicates with the heat exchange oil outlet hole 57b. The cooling oil flows through the valve channel 56 from the inlet 56a of the valve channel 56, the temperature control valve 60, and the outlet 56b of the valve channel 56 in sequence.

In this embodiment of this application, the temperature control valve 60 is configured to control the flow of the valve channel 56. When a temperature of the cooling oil is low, a relatively large amount of cooling oil flows into the valve channel 56, and a relatively small amount of cooling oil flows through the circulation plates 57 of the heat exchanger 50. This prevents more cooling oil from being cooled by the heat exchanger 50, helps quickly increase a temperature of low-temperature cooling oil, helps the oil pump 40 (as shown in FIG. 3) work quickly and normally, and helps reduce a viscosity of the cooling oil, reduce system oil resistance, reduce an oil churning loss when the gear set of the speed reducer 20 works, and reduce a power loss of the powertrain 2. When a temperature of the cooling oil is high, a relatively small amount of cooling oil flows into the valve channel 56, and a relatively large amount of cooling oil flows through the circulation plates 57 of the heat exchanger 50. This helps more hot-cooling oil be cooled by the heat exchanger 50, and facilitates cooling and lubrication of the speed reducer 20 (as shown in FIG. 2) and the motor 30 (as shown in FIG. 2), to implement temperature rise control on the powertrain 2. The arrangement of the valve channel 56 and the temperature control valve 60 is helpful to implement high efficiency of operation of the powertrain 2.

Still refer to FIG. 12. In an embodiment, the valve channel 56 is stacked between one circulation plate 57e and another circulation plate (not shown in the figure).

In this embodiment of this application, the temperature control valve 60 is located in the valve channel 56, and the temperature control valve 60 is configured to control a flow of the valve channel 56. The temperature control valve 60 and the valve channel 56 are stacked between the one circulation plate 57e and another circulation plate (not shown in the figure) of the heat exchanger 50, so that the valve channel 56 is integrated in the heat exchanger 50 without occupying much space outside the heat exchanger 50.

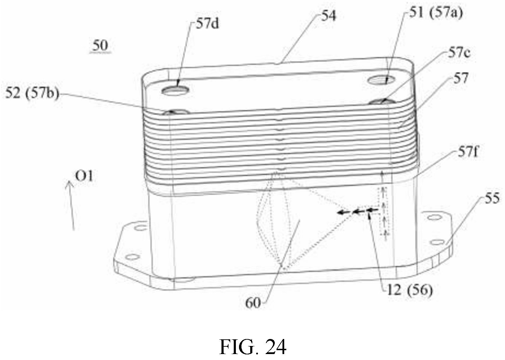

Still refer to FIG. 12 and FIG. 24. FIG. 24 is a diagram of a structure of a heat exchanger 50 according to an embodiment of this application. In an embodiment, the heat exchanger 50 further includes a top plate 54 (as shown in FIG. 24). The top plate 54 is stacked on the plurality of circulation plates 57, and the valve channel 56 is stacked between the top plate 54 (as shown in FIG. 24) and one circulation plate 57. The top plate 54 is not shown in FIG. 12.

In this embodiment of this application, the top plate 54 is located at the top of the heat exchanger 50 in a direction perpendicular to an axial direction O1 of the heat exchanger. No cooling oil or coolant flows on the top plate 54, and the top plate 54 is configured to communicate with and block off cooling oil or coolant flowing on a circulation plate 57 closest to the top plate 54 (as shown in FIG. 24), to isolate an oil passage and a liquid passage in the heat exchanger 50 from the outside. In this embodiment of this application, the top plate 54 (as shown in FIG. 24) communicates with a cooling system of the entire vehicle without a liquid pipe or a pipeline on the top of the top plate 54. The temperature control valve 60 and the valve channel 56 are stacked between the top plate 54 and one circulation plate 57. The top plate 54 (as shown in FIG. 24), the valve channel 56, and the plurality of circulation plates 57 are arranged in sequence in the direction perpendicular to the axial direction O1 of the heat exchanger.

In an embodiment, the top plate 54 (as shown in FIG. 24) may be an integrally formed plate structure, so that a processing process is simple.

In an embodiment, the top plate 54 (as shown in FIG. 24) has a same structure as the circulation plate 57. To be specific, the top plate 54 also has four circulation holes, and the four circulation holes are sealed by using sealing pieces. In this way, one of the circulation plates 57 may be used for the top plate 54, and a process production die is simplified.

Refer to FIG. 24. In an embodiment, the top plate 54 includes two water holes (not shown in the figure).

In this embodiment of this application, the two water holes respectively communicate with the other two openings 57c and 57d of the circulation plate 57, and are configured to communicate with a coolant pipeline from the top of the top plate 51, to communicate with a cooling system of the entire vehicle. One water hole is configured to flow in the coolant for heat exchange and cooling of the cooling oil in the heat exchanger 50, and the other water hole is configured to flow out the coolant whose temperature is increased through heat exchange of the heat exchanger 50.

Refer to FIG. 24. In an embodiment, the heat exchanger 50 further includes a mounting plate 55. The mounting plate 55 is configured to fasten the housing 10 (as shown in FIG. 2) of the powertrain 2, and the valve channel 56 is stacked between one circulation plate 57f and the mounting plate 55.

In this embodiment of this application, the mounting plate 55 is located at the bottom of the heat exchanger 50 in the direction perpendicular to the axial direction O1 of the heat exchanger. The temperature control valve 60 is located in the valve channel 56. The temperature control valve 60 and the valve channel 56 are stacked between the one circulation plate 57f and the mounting plate 55. The top plate 54, the plurality of circulation plates 57, the valve channel 56, and the mounting plate 55 are arranged in sequence in the direction perpendicular to the axial direction O1 of the heat exchanger.

Refer to FIG. 24. In an embodiment, the mounting plate 55 includes two oil holes 58 and 59 (as shown in FIG. 9). In this embodiment of this application, the two oil holes 58 and 59 of the mounting plate 55 are respectively an inlet 59 of the heat exchanger 50 and an outlet 58 of the heat exchanger 50 (as shown in FIG. 9), and respectively communicate with the heat exchange oil inlet hole 57a and the heat exchange oil outlet hole 57b on the circulation plate 57. The two oil holes on the mounting plate 55 respectively communicate with the first oil inlet section 11c and the first oil outlet section 11d of the first oil line 11. The mounting plate 55 is located at the bottom of the heat exchanger 50 in the direction perpendicular to the axial direction O1 of the heat exchanger, and has two oil holes 58 and 59, which helps the heat exchanger 50 receive the cooling oil from the housing 10 of the powertrain 2 more smoothly, and also helps input cooled cooling oil inside the heat exchanger 50 into the housing 10 of the powertrain 2 more smoothly.

Refer to FIG. 24. In an embodiment, the mounting plate 55 includes two oil holes 58 and 59, and further includes two water holes (not shown in the figure). In this embodiment of this application, the two oil holes 58 and 59 of the mounting plate 55 are respectively an inlet 59 of the heat exchanger 50 and an outlet 58 of the heat exchanger 50 (as shown in FIG. 9), and respectively communicate with the heat exchange oil inlet hole 57a and the heat exchange oil outlet hole 57b on the circulation plate 57. The two water holes are connected to a coolant pipeline inside the housing 10 of the powertrain 2, to communicate with a cooling system of the entire vehicle. The two water holes and the two oil holes 58 and 59 are all located on the mounting plate 55. This helps cooling water and cooling oil line flow into the heat exchanger 50 more smoothly from the housing 10 of the powertrain 2, and also helps the cooling oil and the cooling water in the heat exchanger 50 flow out from the heat exchanger 50 into the housing 10 of the powertrain 2 more smoothly. The two water holes are also arranged on the mounting plate 55, which facilitates integration of a cooling pipe into the housing 10 of the powertrain 2. Therefore, the cooling pipe does not need to be arranged on the top plate 54 of the heat exchanger 50. This helps reduce space occupation in the powertrain 2 in the direction perpendicular to the axial direction O1 of the heat exchanger, helps reduce an overall volume of the powertrain 2, and helps implement miniaturization of the powertrain 2.

Still refer to FIG. 4. The powertrain 2 further includes a coolant path 17. After flowing through the motor control unit 70 to cool the motor control unit 70, cooling liquid in the cooling liquid path 17 flows into the heat exchanger 50 for heat exchange with the oil passage of the heat exchanger 50, and then flows into the cooling system of the entire vehicle.

The powertrain with a controllable oil line flow, the heat exchanger, and the electric vehicle provided in embodiments of this application are described above in detail. The principle and embodiments of this application are described herein through specific examples. The descriptions about embodiments are merely provided to help understand the method and core ideas of this application. In addition, a person of ordinary skill in the art can make modifications in terms of the specific embodiments and application scopes according to the ideas of this application. Therefore, the content of this specification shall not be construed as a limitation to this application.

## Claims

1. A powertrain with a controllable oil line flow, wherein the powertrain comprises a housing, a heat exchanger, an oil pump, a temperature control valve, a first oil line, and a second oil line, the housing comprises a speed reducer accommodating cavity, the speed reducer accommodating cavity is configured to accommodate a gear set of a speed reducer, an inlet of the oil pump is configured to communicate with the speed reducer accommodating cavity, and the first oil line and the second oil line are connected in parallel between an outlet of the oil pump and the speed reducer accommodating cavity, wherein
the heat exchanger is configured to cool cooling oil in the first oil line; and
the temperature control valve is configured to control a flow proportion between the first oil line and the second oil line.

2. The powertrain according to claim 1, wherein the heat exchanger is located in the first oil line, and the temperature control valve is located in the second oil line or located at an intersection of the first oil line and the second oil line.

3. The powertrain according to claim 1 or 2, wherein the temperature control valve comprises one inlet and one outlet, the second oil line comprises a second oil inlet section and a second oil outlet section, the second oil inlet section is configured to communicate the outlet of the oil pump with the inlet, and the second oil outlet section is configured to communicate the outlet with the speed reducer accommodating cavity.

4. The powertrain according to claim 1 or 2, wherein the temperature control valve comprises one inlet and two outlets, the first oil line comprises a first oil inlet section and a first oil outlet section, the inlet is configured to communicate with the outlet of the oil pump, one outlet is configured to communicate with an inlet of the second oil line, the first oil inlet section is configured to communicate the other outlet with an inlet of the heat exchanger, and the first oil outlet section is configured to communicate an outlet of the heat exchanger with the speed reducer accommodating cavity.

5. The powertrain according to claim 1 or 2, wherein the temperature control valve comprises two inlets and one outlet, the first oil line comprises a first oil inlet section and a first oil outlet section, one inlet is configured to communicate with an outlet of the second oil line, the first oil inlet section is configured to communicate the outlet of the oil pump with an inlet of the heat exchanger, the first oil outlet section is configured to communicate an outlet of the heat exchanger with the other inlet, and the outlet is configured to communicate with the speed reducer accommodating cavity.

6. The powertrain according to any one of claims 1 to 5, wherein the powertrain further comprises a third oil line and a fourth oil line, an inlet of the third oil line is configured to communicate with the outlet of the oil pump, an outlet of the third oil line is configured to communicate with an inlet of the first oil line and the inlet of the second oil line, an inlet of the fourth oil line is configured to communicate with an outlet of the first oil line and the outlet of the second oil line, and an outlet of the fourth oil line is configured to directly communicate with the speed reducer accommodating cavity.

7. The powertrain according to any one of claims 1 to 6, wherein the temperature control valve and the second oil line are stacked on the heat exchanger, the heat exchanger comprises an oil inlet and an oil outlet, the oil inlet is configured to communicate with the outlet of the oil pump, the oil outlet is configured to communicate with the speed reducer accommodating cavity, the second oil line is connected in parallel to an oil line between the oil inlet and oil outlet, the inlet of the second oil line communicates with the oil inlet, and the outlet of the second oil line communicates with the oil outlet.

8. The powertrain according to any one of claims 1 to 7, wherein the housing comprises an intermediate housing and a speed reducer end cover, the intermediate housing comprises a speed reducer accommodating groove and the second oil line that are formed by integrated die casting, and the speed reducer accommodating groove and the speed reducer end cover enclose to form the speed reducer accommodating cavity.

9. The powertrain according to claim 8, wherein the intermediate housing further comprises an oil pump accommodating groove and an oil outlet hole, the oil pump accommodating groove is configured to accommodate the oil pump, the oil outlet is configured to communicate with the second oil line, and an opening of the oil outlet hole faces the speed reducer accommodating cavity.

10. The powertrain according to any one of claims 1 to 9, wherein the powertrain comprises two heat exchangers, two oil pumps, two first oil lines, two second oil lines, and one temperature control valve, and the housing comprises two speed reducer accommodating cavities, wherein
the two speed reducer accommodating cavities communicate with each other, the two second oil lines communicate with each other, and the temperature control valve is further configured to control the flow proportion between the first oil line and the second oil line.

11. A heat exchanger integrated with a temperature control valve, wherein the heat exchanger comprises the temperature control valve, a valve channel, and a plurality of circulation plates, the plurality of circulation plates are stacked, and each circulation plate comprises four openings, wherein two openings are used for circulating cooling oil, and the other two openings are used for circulating coolant; and
the temperature control valve and the valve channel are arranged on one side of one circulation plate, the temperature control valve is located in the valve channel, an inlet and an outlet of the valve channel respectively communicate with the two openings of the one circulation plate, and the temperature control valve is configured to control a flow of the valve channel.

12. The heat exchanger according to claim 11, wherein the valve channel is stacked between the one circulation plate and another circulation plate.

13. The heat exchanger according to claim 11, wherein the heat exchanger further comprises a top plate, the top plate is stacked on the plurality of circulation plates, and the valve channel is stacked between the top plate and the one circulation plate.

14. The heat exchanger according to claim 11, wherein the heat exchanger further comprises a mounting plate, the mounting plate is configured to fasten a powertrain housing, and the valve channel is stacked between the one circulation plate and the mounting plate.

15. An electric vehicle, wherein the electric vehicle comprises a vehicle body, a cooling system, and the powertrain according to any one of claims 1 to 10 or the heat exchanger according to any one of claims 11 to 14, the vehicle body is configured to fasten the cooling system, and the powertrain or the heat exchanger, the cooling system is configured to perform heat exchange with the heat exchanger, and the powertrain is configured to provide power for a wheel of the electric vehicle.
